# EUROPEAN PATENT APPLICATION

(11) **EP 4 779 446 A1**
(43) Date of publication of application: **22.07.2026**
(21) Application number: 24872681.2
(22) Date of filing: 17.07.2024
(51) Int. Cl.: G06F 3/0484, G06F 3/14, G06F 9/451, G06F 3/0481

(54) **DISPLAY DEVICE AND OPERATION METHOD THEREOF**

(30) Priority: 27.09.2023 KR 20230131157
(71) Applicant: Samsung Electronics Co., Ltd., Suwon-si, Gyeonggi-do 16677 (KR)
(72) Inventor: KIM, Hongjae, Suwon-si, Gyeonggi-do 16677 (KR); KOH, Nayoung, Suwon-si, Gyeonggi-do 16677 (KR); LEE, Inki, Suwon-si, Gyeonggi-do 16677 (KR); HAN, Sangjin, Suwon-si, Gyeonggi-do 16677 (KR)
(74) Representative: Appleyard Lees IP LLP
(86) International application number: PCT/KR2024/010307
(87) International publication number: WO 2025/070971

(57) **Abstract**

A display device disclosed receives and displays screen data from a source device that provides the screen data and is from among one or more source devices connected via wired or wireless communication, transmits input data received from an input device connected via wired or wireless communication to a source device that has screen control authority and is from among the one or more source devices, transmits, to the source device having the screen control authority, information for switching the screen control authority, based on receiving, from the source device having the screen control authority, a request associated with the screen control authority, in response to a pointer, which is displayed by the source device having the screen control authority for controlling a display position by using the input data, being positioned in a predetermined region of a display screen corresponding to the screen data, receives, from the source device having the screen control authority, a graphical user interface screen enabling switching of the screen control authority, which is generated based on the information for switching the screen control authority, and displays the received graphical user interface screen.

## Description

### Technical Field

Various embodiments relate to a display device and an operation method thereof, and more particularly, to a display device for connecting an input device and a source device and an operation method of the display device.

### Background Art

A Keyboard, Video, Mouse (KVM) switch is a device that allows control of two or more computers using one keyboard, one video monitor, and one mouse. Here, KVM stands for Keyboard, Video Monitor, and Mouse. In other words, the KVM switch is a technology for connecting the main bodies of multiple computers to a single set of a keyboard, video monitor, and mouse, enabling a user to select and control any one of those computers. Currently, the use of a KWM switch involves a complicated process of connecting multiple computers and requires separate physical equipment to connect the computers.

### Disclosure of Invention

### Solution to Problem

According to an embodiment of the present disclosure, there is provided a display device capable of transmitting input data from an input device to a source device connected to the display device, without requiring separate physical equipment.

According to an embodiment of the present disclosure, there is provided a display device capable of facilitating switching of a source device having screen control authority and facilitating switching of the screen control authority from the source device having the screen control authority to the display device.

Technical solutions to be achieved in the present disclosure are not limited to those described above, and other technical solutions not described herein will be clearly understood by those of ordinary skill in the art from the following description.

According to an embodiment, the display device may include a display, a communication interface, memory storing one or more instructions, and at least one processor configured to execute the one or more instructions stored in the memory.

According to an embodiment, the at least one processor may be configured to execute the one or more instructions to control the display to receive and display screen data from a source device that provides the screen data and is from among one or more source devices connected via wired or wireless communication.

According to an embodiment, the at least one processor may be configured to execute the one or more instructions to transmit input data received from an input device connected via wired or wireless communication to a source device that has screen control authority, which represents an authority to control the screen data, and is from among the one or more source devices.

According to an embodiment, the at least one processor may be configured to execute the one or more instructions to, based on receiving, from the source device having the screen control authority, a request associated with the screen control authority, in response to a pointer, which is displayed by the source device having the screen control authority for controlling a display position by using the input data received from the input device, being positioned in a predetermined region of a display screen output by the source device having the screen control authority, control the communication interface to transmit, to the source device having the screen control authority, information for switching the screen control authority.

According to an embodiment, the at least one processor may be configured to execute the one or more instructions to control the communication interface to receive, from the source device having the screen control authority, a graphical user interface screen enabling switching of the screen control authority, which is generated based on the information for switching the screen control authority.

According to an embodiment, the at least one processor may be configured to execute the one or more instructions to control the display to display the received graphical user interface screen.

An operation method of a display device, according to an embodiment, may include receiving and displaying screen data from a source device that provides the screen data and is from among one or more source devices connected via wired or wireless communication.

According to an embodiment, the operation method of the display device may include transmitting input data received from an input device connected via wired or wireless communication to a source device that has screen control authority, which represents an authority to control the screen data, and is from among the one or more source devices.

According to an embodiment, the operation method of the display device may include transmitting, to the source device having the screen control authority, information for switching the screen control authority, based on receiving, from the source device having the screen control authority, a request associated with the screen control authority, in response to a determination that a pointer, which is displayed by the source device having the screen control authority for controlling a display position by using the input data received from the input device, is positioned in a predetermined region of a display screen on which the screen data is displayed.

According to an embodiment, the operation method of the display device may include receiving, from the source device having the screen control authority, a graphical user interface screen enabling switching of the screen control authority, which is generated based on the information for switching the screen control authority.

According to an embodiment, the operation method of the display device may include displaying the received graphical user interface screen.

According to an embodiment, a computer-readable recording medium having recorded thereon one or more programs to be executed by a processor of a display device for implementing an operation method may be provided, wherein the operation method includes receiving and displaying screen data from a source device that provides the screen data and is from among one or more source devices connected via wired or wireless communication, transmitting input data received from an input device connected via wired or wireless communication to a source device that has screen control authority, which represents an authority to control the screen data, and is from among the one or more source devices, transmitting, to the source device having the screen control authority, information for switching the screen control authority, based on receiving, from the source device having the screen control authority, a request associated with the screen control authority, in response to a determination that a pointer, which is displayed by the source device having the screen control authority for controlling a display position by using the input data received from the input device, is positioned in a predetermined region of a display screen on which the screen data is displayed, receiving, from the source device having the screen control authority, a graphical user interface screen enabling switching of the screen control authority, which is generated based on the information for switching the screen control authority, and displaying the received graphical user interface screen.

According to a display device, a method, and a non-transitory computer-readable storage medium according to embodiments, input data from an input device may be transmitted to a source device to be connected to the display device without the need for separate physical equipment.

According to a display device, a method, and a non-transitory computer-readable storage medium according to embodiments, it is possible to facilitate switching of a source device having screen control authority and to facilitate switching of the screen control authority from the source device having the screen control authority to the display device.

The effects that can be obtained from embodiments disclosed in the present disclosure are not limited to those described above, and other effects that are not described will be clearly understood by those of ordinary skill in the art from the following description.

### Brief Description of Drawings

The foregoing and other aspects, features, and advantages of embodiments of the present disclosure will be readily understood from the following detailed description taken in conjunction with the accompanying drawings.
FIG. 1 is a reference diagram illustrating operations of a display device, a control device, and a source device, according to various embodiments.
FIG. 2 illustrates an example of a display device system according to an embodiment.
FIG. 3 is a block diagram of an example of a display device, according to an embodiment.
FIG. 4 is a block diagram of an example of a display device, according to an embodiment.
FIG. 5 is a flowchart of an example of an operation method of a display device, according to an embodiment.
FIG. 6 illustrates an example of information for switching screen control authority, according to an embodiment.
FIG. 7 illustrates information for switching screen control authority and examples of graphical user interface (GUI) screens that enable switching of the screen control authority, according to an embodiment.
FIG. 8 is a flowchart of an example of an operation method for connecting an input device and a source device to a display device, according to an embodiment.
FIG. 9 is a flowchart of an example of an operation method for connecting a display device to a source device in order to transmit and receive control signals for switching screen control authority, according to an embodiment.
FIG. 10 illustrates an example of a user interface screen that allows configuration of settings related to screen control authority switching at a source device, according to an embodiment.
FIG. 11 is a flowchart of an example of an operation method of a display device and a source device for switching screen control authority, according to an embodiment.
FIG. 12 is a diagram illustrating an example of a predetermined region of a display screen, according to an embodiment.
FIG. 13 illustrates an example of the operation method illustrated in FIG. 11.
FIG. 14 illustrates an example of the operation method of FIG. 11.
FIG. 15 is a flowchart illustrating an example of an operation method when selecting an item on a GUI that enables switching of screen control authority, according to an embodiment.
FIG. 16 is a flowchart illustrating an example of an operation method in a case where one item is selected on a GUI that enables switching of screen control authority, according to an embodiment.
FIG. 17 illustrates an example of an operation method described with reference to FIGS. 15 and 16.
FIG. 18 illustrates an example of an operation method described with reference to FIGS. 14 and 15.
FIG. 19 illustrates an example of an operation method described with reference to FIGS. 15 and 16.
FIG. 20 illustrates an example of an operation method described with reference to FIGS. 15 and 16.
FIG. 21 illustrates an example of an operation method described with reference to FIGS. 15 and 16.

### Mode for the Invention

Terms used in the present specification will now be briefly described and then the present disclosure will be described in detail.

As the terms used herein, general terms that are currently widely used are selected by taking into account functions according to the present disclosure, but the terms may vary according to the intention of those skilled in the art, precedent cases, advent of new technologies, etc. Furthermore, specific terms may be arbitrarily selected by the applicant, and in this case, the meaning of the selected terms will be described in detail in a corresponding part of the detailed description of the disclosure. Thus, the terms used in the present disclosure should be defined not by simple appellations thereof but based on the meaning of the terms together with the overall description of the present disclosure.

Throughout the specification, when a part "includes" or "comprises" an element, unless there is a particular description contrary thereto, it is understood that the part may further include other elements, not excluding the other elements. Additionally, terms such as "module," "unit," "part," etc., described in the specification may be physically implemented by analog and/or digital circuits including one or more of logic gates, integrated circuits, microprocessors, microcontrollers, memory circuits, passive electronic components, active electronic components, etc.

Embodiments will be described more fully hereinafter with reference to the accompanying drawings so that they may be easily implemented by one of ordinary skill in the art. However, the present disclosure may be implemented in different forms and should not be construed as being limited to embodiments set forth herein. In addition, parts not related to descriptions of the present disclosure are omitted to clearly explain the present disclosure in the drawings, and like reference numerals denote like elements throughout.

In an embodiment in the present specification, the term "user" refers to a person who controls a function or operation of a computing apparatus or an electronic device by using a control device, and may include a viewer, an administrator, or an installation engineer.

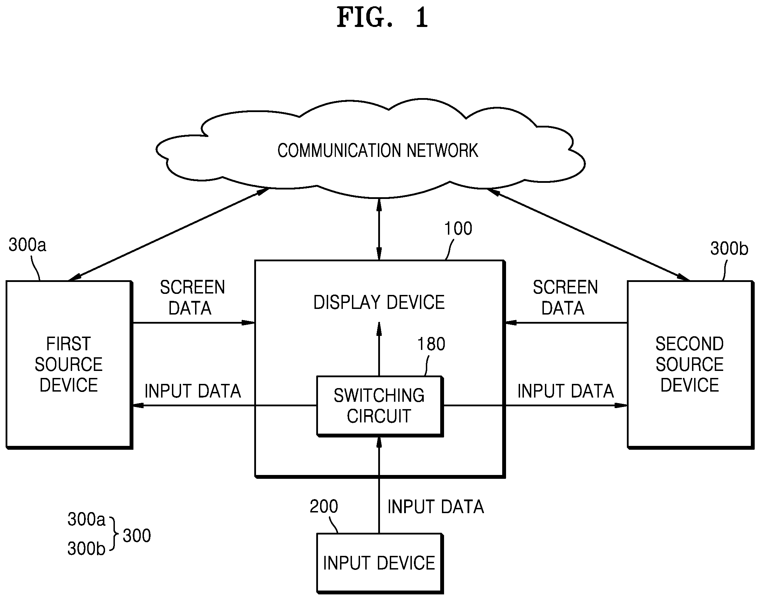

FIG. 1 is a reference diagram illustrating operations of a display device, an input device, and a source device, according to various embodiments.

Referring to FIG. 1, a display device 100 may display content received from various sources. For example, the display device 100 may receive content from various sources and display the received content on a display. The display device 100 may be, for example, a television (TV), a monitor, a personal computer, etc. The display device 100 may be connected to one or more source devices 300 that provide content. For example, referring to FIG. 1, the display device 100 may be connected to a first source device 300a and a second source device 300b. The display device 100 may be connected to an input device 200 that provides input data.

The source device 300 may represent an electronic device that provides content to the display device 100 according to a user input received from the display device 100. The source device 300 may include, for example, an electronic device such as a personal computer (PC), a game console, or a set-top box. The source device 300 may execute a content application according to a user input received from the display device 100, and transmit, to the display device 100 via a communication network, a resulting screen generated based on the execution of the content application. For example, when the source device 300 is a game console, based on receiving from the display device 100 a user input for requesting execution of a game application, the source device 300 may execute the game application and transmit, to the display device 100 via a communication network, a resulting screen or a resulting image rendered based on the execution of the game application. The display device 100 may transmit to the source device 300 a user input requesting execution of a content application, receive from the source device 300 a resulting screen rendered based on the execution of the content application in response to the user input, and display the received resulting screen on the display.

The input device 200 may represent an electronic device that provides the display device 100 with input data corresponding to a user input. For example, the input device 200 may be a remote controller, game pad, keyboard, mouse, etc. for controlling a screen displayed on the display of the display device 100.

Referring to FIG. 1, the display device 100 may be connected to the first source device 300a and the second source device 300b. The display device 100 may display, on the display, a display screen obtained by the display device 100 itself, screen data received from the first source device 300a, or screen data received from the second source device 300b.

The display device 100 may control a screen displayed on the display of the display device 100 by using input data received from the input device 200. For example, while the display device 100 displays screen data received from the first source device 300a, the display device 100 may transmit, to the first source device 300a, input data received from the input device 200. For example, while the display device 100 displays screen data received from the second source device 300b, the display device 100 may transmit, to the second source device 300b, input data received from the input device 200. For example, while the display device 100 displays screen data obtained by the display device itself, the display device 100 may internally consume input data received from input device 200.

According to an embodiment, when the display device 100 is connected to various source devices and is capable of receiving and displaying screen data from the source devices, the display device 100 may use the switching circuit 150 to switch and transmit input data from the input device 200 to an appropriate source so that the input data from the one input device 200 may be used to control the display device 100, the first source device 300a, and the second source device 300b. In this way, by arranging, within the display device 100, the switching circuit 150 for switching and transmitting the input data from the input device 200, the need for separate physical equipment such as a Keyboard, Video, and Mouse (KVM) switch may be eliminated.

According to an embodiment, the display device 100 may receive and display screen data from a source device that provides the screen data and is from among one or more source devices connected via wired or wireless communication.

According to an embodiment, the display device 100 may transmit input data received from the input device 200 to a source device having screen control authority that represents the authority to control screen data. By using the received input data, the source device having the screen control authority may control a position of a mouse pointer displayed on the display screen output by the source device, move a position of a specific indicator displayed on the display screen, or move a highlight indicating a currently selected menu item among a plurality of menu items displayed on the display screen.

According to an embodiment, in response to a request from a source device having screen control authority, based on a pointer, which corresponds to movement of the input device, being positioned in a predetermined region of the display screen, the display device 100 may transmit information for switching the screen control authority to the source device having the screen control authority. According to an embodiment, the source device having screen control authority may receive input data from the display device 100 and detect, based on the input data, whether a pointer corresponding to movement of the input device 200 is positioned within a predetermined region of the display screen.

According to an embodiment, based on detecting that the pointer corresponding to the movement of the input device is positioned in the predetermined region of the display screen, the source device having the screen control authority may transmit, to the display device 100 via a communication interface, a request for information for switching the screen control authority. The source device having the screen control authority may search for the display device 100 by using a short-range communication technology and pre-register the discovered display device 100. The source device having the screen control authority may transmit, to the pre-registered display device 100, via a communication interface based on the short-range communication technology, a request for information for switching the screen control authority to the display device 100.

According to an embodiment, in response to the request from the source device having the screen control authority, the display device 100 may transmit, to the source device having the screen control authority via the communication interface, information for switching the screen control authority. According to an embodiment, the information for switching the screen control authority may include information about one or more sources to which the screen control authority is switchable, and the information about the one or more sources to which the screen control authority is switchable may include at least one of information indicating a screen that may be provided by one or more source devices to which the screen control authority is switchable, information indicating applications that are executable on the one or more source devices to which the screen control authority is switchable, information indicating an application that is executable on the source device having the screen control authority, information indicating a screen that may be provided by the display device 100, and information indicating an application that is executable on the display device. The screen that may be provided by the one or more source devices to which the screen control authority is switchable may include a home screen or a most recent screen that may be provided by the one or more source devices to which the screen control authority is switchable. According to an embodiment, the information for switching the screen control authority may further include information indicating whether the display screen is a single-view or a multi-view. The display device 100 may determine variously what information to include in the information for switching the screen control authority, based a policy or user settings for the display device 100.

According to an embodiment, the source device having the screen control authority may receive, from the display device 100, the information for switching the screen control authority, generate, based on the information, a graphical user interface (GUI) screen that enables switching of the screen control authority, and transmit the generated GUI screen to the display device 100.

According to an embodiment, the display device 100 may receive the GUI screen from the source device having the screen control authority and output the GUI screen. The GUI screen that enables switching of the screen control authority may include one or more items respectively corresponding to the one or more sources to which the screen control authority is switchable.

According to an embodiment, the display device 100 may receive, from the input device, input data indicating selection of an item representing a source on the GUI screen and transmit the input data to the source device having the screen control authority.

According to an embodiment, in response to identifying, based on the input data, that a source to which the screen control authority is to be switched relates to the source device, the display device 100 may receive, from the source device, an execution screen on which an application of the source device corresponding to the selected item is executed, and display the execution screen.

According to an embodiment, based on the input data, the display device 100 may receive, from the source device, information about a source to which the screen control authority is to be switched, identify whether the source to which the screen control authority is to be switched relates to the display device, determine whether a screen provided by the display is a multi-view screen in response to identifying that the source to which the screen control authority is to be switched relates to the display device, and based on the screen being the multi-view screen, maintain a current multi-view screen of the display device and convert a pointer of the source device into a pointer of the display device for display.

According to an embodiment, based on the input data, the display device 100 may receive, from the source device, information about a source to which the screen control authority is to be switched, identify whether the source to which the screen control authority is to be switched relates to the display device, determine whether a screen provided on the display is a multi-view screen in response to identifying that the source to which the screen control authority is to be switched relates to the display device, and based on the screen being a single-view screen, display, in correspondence with the information about the source to which the screen control authority is to be switched, one of a most recent screen that may be provided by the display device, a home screen that may be provided by the display device, or a screen on which an application of the display device is executed.

By a specific program executed on the source device, the display device may be discovered based on the short-range communication and pre-registered with the source device for transmission and reception of information for the screen control authority.

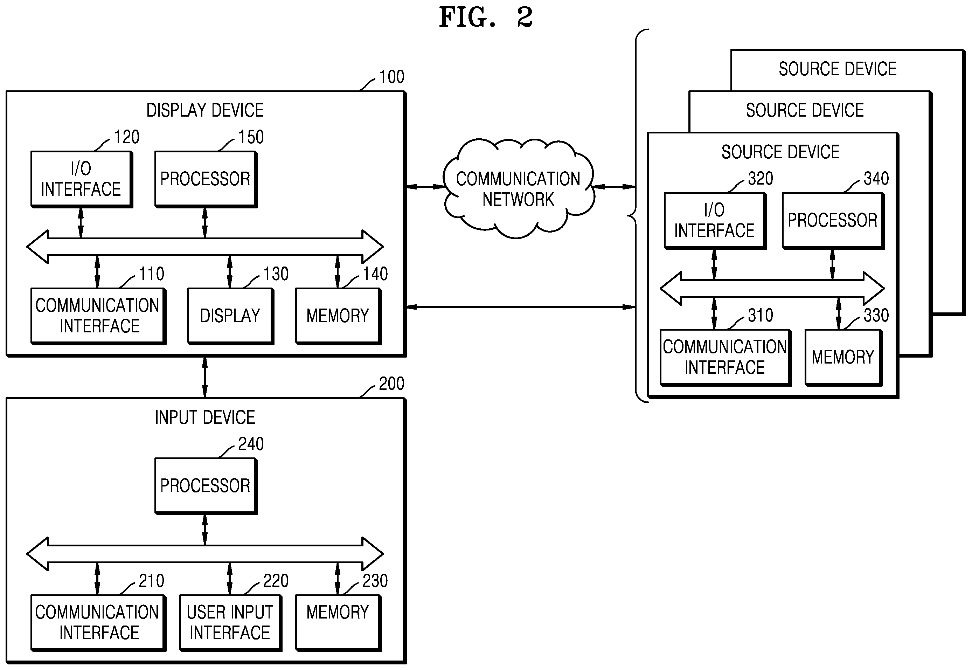

FIG. 2 illustrates an example of a display device system according to an embodiment.

Referring to FIG. 2, a system may include a display device 100, an input device 200, and a source device 300, which are connected via a communication network.

The display device 100 may include a communication interface 110, an input/output interface 120, a display 130, memory 140, and a processor 150. However, the display device 100 may be implemented with more components than those shown in FIG. 2, and is not limited to the above example. For example, the display device 100 may have a separate image processor for performing image processing on images for an application executed on the display device 100.

The communication interface 110 may communicate with at least one external device. Here, 'communication' may refer to the operation of transmitting and/or receiving data, signals, requests, and/or commands.

The communication interface 110 may perform wired or wireless communication with at least one external device. For example, an external device may be a source device, a server, a storage device, or another device capable of providing content.

For example, the communication interface 110 may include at least one of a communication module, communication circuitry, and a communication device for performing wired or wireless communication with at least one external device.

For example, the communication interface 110 may include at least one wireless communication module, wireless communication circuit, or wireless communication device that performs wireless communication with an external device, such as a control device.

The communication interface 110 may include one or more modules that enable wireless communication between the display device 100 and a wireless communication system or between the display device 100 and a network where another device is located.

According to an embodiment, the communication interface 110 may perform communication with the display device 100 according to a short-range communication technology. Short-range communication technologies may include, for example, Bluetooth communication, Wi-Fi communication, Universal Serial Bus (USB) communication, etc. According to an embodiment, the communication interface 110 may include one or more of a Bluetooth communication module that performs communication according to a Bluetooth communication protocol and a Wi-Fi communication module that performs communication according to a Wi-Fi communication protocol.

The I/O interface 120 may, under the control of the processor 150, receive video (e.g., moving images, etc.), audio (e.g., voice, music, etc.), and additional information from outside the display device 100. The I/O interface 120 may include one of a High-Definition Multimedia Interface (HDMI) port, a component jack, a PC port, and a USB port, or a combination of one or more thereof. The I/O interface 120 may further include, in addition to the HDMI port, a DisplayPort (DP), a Thunderbolt, and a Mobile High-Definition Link (MHL).

According to an embodiment, the I/O interface 120 may be connected to the source device 300 via an HDMI port. Accordingly, the I/O interface 120 may receive, via the HDMI port, screen data to be displayed on the display of the display device 100.

According to an embodiment, the I/O interface 120 may be connected to the input device 200 via a USB port. Accordingly, the I/O interface 120 may receive input data from the input device 200 via the USB port.

According to an embodiment, the I/O interface 120 may be connected to the source device 300 via a USB port. Accordingly, the I/O interface 120 may transmit input data from the input device 200 to the source device 300 via the USB port.

The display 130 may output an image onto the screen under the control of the processor 150. For example, the processor 150 may control the display 130 so that an intended image is output onto the display 130.

The display 130 outputs images onto the screen. For example, the display 130 may output images corresponding to video data via a display panel internally included therein so that a user may visually recognize the video data. Specifically, the video data that constitutes the content may include a plurality of frame images, and the display 130 may play the video content by sequentially displaying the plurality of frame images under the control of the processor 150.

The memory 140 may store programs necessary for processing or control by the processor 150, and store data input to or output from the display device 100.

The memory 140 may include at least one type of storage medium from among a flash memory-type memory, a hard disk-type memory, a multimedia card micro-type memory, a card-type memory (e.g., a Secure Digital (SD) card or an eXtreme Digital (xD) memory), random access memory (RAM), static RAM (SRAM), read-only memory (ROM), electrically erasable programmable ROM (EEPROM), PROM, a magnetic memory, a magnetic disk, and an optical disk.

Although not shown, the display device 100 may further include a user input interface. The user input interface may be any form of interface capable of receiving a user input. For example, the user input interface may include manipulation buttons arranged on a portion of the display device 100 to receive a user input, a touch-sensitive display configured to detect a touch input, a microphone capable of receiving a voice uttered by the user, etc.

The processor 150 controls all operations of the display device 100. For example, the processor 150 may execute one or more instructions stored in the memory 140 to perform functions of the display device 100 described in the present disclosure. The processor 150 may include various types of processing circuitry and/or a plurality of processors. For example, the term "processor" as used herein, including that in the claims, may include various types of processing circuitry including at least one processor. One or more of the at least one processor, individually and/or collectively in a distributed form, may be configured to perform various functions described herein. As used herein, "a processor," "at least one processor," and "one or more processors" may be configured to perform various functions. However, these terms cover, without limitation, situations in which one processor performs some of recited functions and another processor (other processors) perform other functions, as well as situations in which a single processor may perform all of the recited functions. Furthermore, the at least one processor may include a combination of processors that perform various functions among the recited functions in a distributed manner. The at least one processor may execute program instructions to accomplish or perform various functions.

In an embodiment of the present disclosure, the processor 150 may store one or more instructions in an internal memory provided therein, and execute the one or more instructions stored in the internal memory to control the above-described operations to be performed. In other words, the processor 150 may execute at least one instruction or program stored in the internal memory provided in the processor 150 or the memory 140 to perform predetermined operations.

The input device 200 is described.

The input device 200 may include a communication interface 210, a user input interface 220, memory 230, and a processor 240. However, the input device 200 may be implemented with more components than those shown in FIG. 2, and is not limited to the above example.

The communication interface 210 may communicate with at least one external device. Here, 'communication' may refer to the operation of transmitting and/or receiving data, signals, requests, and/or commands.

The communication interface 210 may perform wired or wireless communication with at least one external device. For example, an external device may be a source device, a server, a storage device, or another device capable of providing content.

For example, the communication interface 210 may include at least one of a communication module, communication circuitry, and a communication device for performing wired or wireless communication with at least one external device.

For example, the communication interface 210 may include at least one wireless communication module, wireless communication circuit, or wireless communication device that performs wireless communication with an external device, such as a control device.

The communication interface 210 may include one or more modules that enable wireless communication between the input device 200 and a wireless communication system or between the input device 200 and a network where another device is located.

According to an embodiment, the communication interface 210 may perform communication with the display device 100 according to short-range communication technology. The short-range communication technology may include, for example, Bluetooth communication, Wi-Fi communication, USB communication, and the like.

According to an embodiment, the communication interface 210 may include one or more of a USB communication module that performs communication according to a USB communication protocol, a Bluetooth communication module that performs communication according to a Bluetooth communication protocol, and a Wi-Fi communication module that performs communication according to a Wi-Fi communication protocol.

The user input interface 220 may be any form of interface capable of receiving a user input. For example, the user input interface 220 may include manipulation buttons arranged on a portion of the input device 200 to receive a user input, a touch-sensitive display configured to detect a touch input, a microphone capable of receiving a voice uttered by the user, etc.

When the input device 200 is implemented as a mouse, the input device 200 may further include one or more sensors for sensing movement of the mouse.

When the input device 200 is implemented as a keyboard, the user input interface 220 may include one or more keys.

The memory 230 may store programs necessary for processing or control by the processor 240, and store data input to or output from the input device 200.

The memory 230 may include at least one type of storage medium from among a flash memory-type memory, a hard disk-type memory, a multimedia card micro-type memory, a card-type memory (e.g., an SD card or an xD memory), RAM, SRAM, ROM, EEPROM, PROM, a magnetic memory, a magnetic disk, and an optical disk.

The processor 240 controls all operations of the input device 200. For example, the processor 240 may execute one or more instructions stored in the memory 230 to perform functions of the input device 200 described in the present disclosure.

In an embodiment of the present disclosure, the processor 240 may store one or more instructions in an internal memory provided therein, and execute the one or more instructions stored in the internal memory to control the above-described operations to be performed. In other words, the processor 240 may execute at least one instruction or program stored in the internal memory provided in the processor 240 or the memory 230 to perform predetermined operations.

According to an embodiment, the processor 240 may execute one or more instructions stored in the memory 230 to perform a communication connection with the display device 100 by using short-range wireless communication technology. The short-range wireless communication technology may include Bluetooth communication technology, Wi-Fi Direct technology, or the like.

According to an embodiment, the processor 240 may execute one or more instructions stored in the memory 220 to control the communication interface 210 to transmit, according to an appropriate communication protocol, a control signal corresponding to a user input received via the user input interface 220.

The input device 200 may be any type of device that performs functions by including a processor and memory. The input device 200 may include various electronic devices such as a keyboard, mouse, trackball, touchscreen, etc.

In addition, a block diagram of the input device 200 illustrated in FIG. 2 is a block diagram for an embodiment. Each of the components in the block diagram may be integrated, added, or omitted according to the specification of the input device 200 that is actually implemented. For example, two or more components may be combined into a single component, or a single component may be subdivided into two or more components, as needed. Furthermore, functions performed by each block are intended to describe embodiments, and a specific operation or device related to the functions does not limit the scope of the present disclosure.

The source device 300 is described.

The source device 300 may include a communication interface 310, an I/O interface 320, memory 330, and a processor 340. However, the source device 300 may be implemented with more components than those shown in FIG. 2, and is not limited to the above example. For example, the source device 300 may have a separate image processor for performing image processing on images for an application executed on the source device 300.

The communication interface 310 may communicate with at least one external device. Here, 'communication' may refer to the operation of transmitting and/or receiving data, signals, requests, and/or commands.

The communication interface 310 may perform wired or wireless communication with at least one external device. For example, an external device may be a source device, a server, a storage device, or another device capable of providing content.

For example, the communication interface 310 may include at least one of a communication module, communication circuitry, and a communication device for performing wired or wireless communication with at least one external device.

For example, the communication interface 310 may include at least one wireless communication module, wireless communication circuit, or wireless communication device that performs wireless communication with an external device, such as a control device.

The communication interface 310 may include one or more modules that enable wireless communication between the source device 300 and a wireless communication system or between the source device 300 and a network where another device is located.

According to an embodiment, the communication interface 310 may perform communication with the display device 100 according to short-range communication technology. The short-range communication technology may include, for example, Bluetooth communication, Wi-Fi communication, USB communication, and the like. According to an embodiment, the communication interface 310 may include one or more of a Bluetooth communication module that performs communication according to a Bluetooth communication protocol and a Wi-Fi communication module that performs communication according to a Wi-Fi communication protocol.

An I/O interface 320 may, under the control of the processor 340, output video (e.g., moving images, etc.), audio (e.g., voice, music, etc.), and additional information to the outside of the source device 300. The I/O interface 320 may include one of an HDMI port, a component jack, a PC port, and a USB port, or a combination of one or more thereof. The I/O interface 320 may further include, in addition to the HDMI port, a DP, a Thunderbolt, and an MHL. For example, when the source device 300 is implemented as a game console, the source device 300 may provide a result screen of game content executed on the source device 300 to the display device 100 via HDMI or the like.

According to an embodiment, the I/O interface 320 may be connected to the display device 100 via an HDMI port. Accordingly, the I/O interface 320 may output, via the HDMI port, screen data to be displayed on the display of the display device 100.

According to an embodiment, the I/O interface 320 may be connected to the display device 100 via an USB port. Accordingly, the I/O interface 320 may receive, from the display device 100 via the USB port, input data from the input device 200.

The memory 330 may store programs necessary for processing or control by the processor 340, and store data input to or output from the source device 300.

The memory 330 may include at least one type of storage medium from among a flash memory-type memory, a hard disk-type memory, a multimedia card micro-type memory, a card-type memory (e.g., an SD card or an xD memory), RAM, SRAM, ROM, EEPROM, PROM, a magnetic memory, a magnetic disk, and an optical disk.

Although not shown, the source device 300 may further include a user input interface. The user input interface may be any form of interface capable of receiving a user input. For example, the user input interface may include manipulation buttons arranged on a portion of the source device 300 to receive a user input, a touch-sensitive display configured to detect a touch input, a microphone capable of receiving a voice uttered by the user, etc.

The processor 340 controls all operations of the source device 300. For example, the processor 340 may execute one or more instructions stored in the memory 330 to perform functions of the source device 300 described in the present disclosure. The processor 340 may include various types of processing circuitry and/or a plurality of processors. For example, the term "processor" as used herein, including that in the claims, may include various types of processing circuitry including at least one processor. One or more of the at least one processor, individually and/or collectively in a distributed form, may be configured to perform various functions described herein. As used herein, "a processor," "at least one processor," and "one or more processors" may be configured to perform various functions. However, these terms cover, without limitation, situations in which one processor performs some of recited functions and another processor (other processors) perform other functions, as well as situations in which a single processor may perform all of the recited functions. Furthermore, the at least one processor may include a combination of processors that perform various functions among the recited functions in a distributed manner. The at least one processor may execute program instructions to accomplish or perform various functions.

In an embodiment of the present disclosure, the processor 340 may store one or more instructions in an internal memory provided therein, and execute the one or more instructions stored in the internal memory to control the above-described operations to be performed. In other words, the processor 340 may execute at least one instruction or program stored in the internal memory provided in the processor 340 or the memory 330 to perform predetermined operations.

According to an embodiment, the processor 340 may execute one or more instructions stored in the memory 330 to control the I/O interface 320 to transmit, to the display device 100, screen data to be displayed on the display of the display device 100.

According to an embodiment, the processor 340 may execute one or more instructions stored in the memory 330 to control the I/O interface 320 to receive, from the display device 100, input data from the input device 200.

According to an embodiment, the processor 340 may execute one or more instructions stored in the memory 330 to perform an operation corresponding to the input data from the input device 200.

According to an embodiment, the processor 340 may execute one or more instructions stored in the memory 330 to detect, based on the input data from the input device 200, whether a pointer corresponding to movement of the input device is positioned in a predetermined region of a display screen.

According to an embodiment, the processor 340 may execute one or more instructions stored in the memory 330 to, based on detecting that the pointer is positioned in the predetermined region of the display screen, control the communication interface 310 to transmit, to the display device 100, a request to send information for switching screen control authority.

According to an embodiment, the processor 340 may execute one or more instructions stored in the memory 330 to control the communication interface 310 to receive, from the display device 100, the information for switching the screen control authority.

According to an embodiment, the processor 340 may execute one or more instructions stored in the memory 330 to generate, based on the information for switching the screen control authority received from the display device 100, a GUI screen that enables switching of the screen control authority, and to control the I/O interface 320 to transmit the generated GUI screen to the display device 100.

A block diagram of the source device 300 illustrated in FIG. 2 is a block diagram for an embodiment. Each of the components in the block diagram may be integrated, added, or omitted according to the specification of the source device 300 that is actually implemented. For example, two or more components may be combined into a single component, or a single component may be subdivided into two or more components, as needed. Furthermore, functions performed by each block are intended to describe embodiments, and a specific operation or device related to the functions does not limit the scope of the present disclosure.

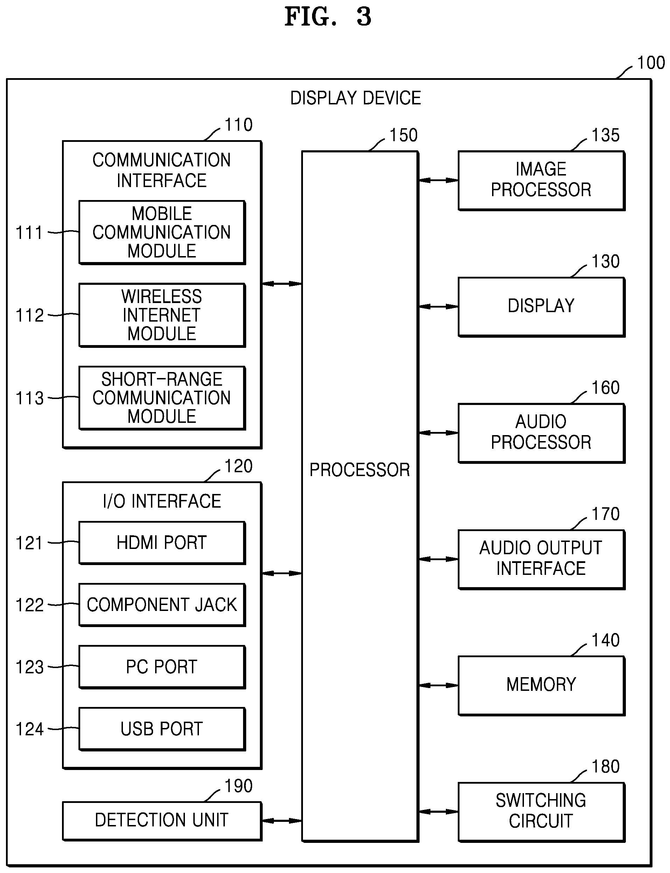

FIG. 3 is a block diagram of an example of a display device, according to an embodiment.

Referring to FIG. 3, the display device 100 is a device capable of displaying an image or data according to a user's request, and may include a communication interface 110, an I/O interface 120, a display 130, memory 140, a processor 150, an image processor 135, an audio processor 160, an audio output interface 170, a switching circuit 180, and a detection unit 190.

The communication interface 110 may include one or more modules that enable wireless communication between the display device 100 and a wireless communication system or between the display device 100 and a network where another device is located.

The communication interface 110 may further include a mobile communication module 111 for transmitting and receiving wireless signals to and from at least one of a base station, an external terminal, and a server on a mobile communication network, a wireless Internet module 112 for wireless Internet access, and a short-range communication module 113. As wireless Internet technologies, wireless local area network (WLAN) (e.g., Wi-Fi), wireless broadband (WiBro), World Interoperability for Microwave Access (WiMAX), high-speed downlink packet access (HSDPA), etc. may be used. The short-range communication module 113 may include, in addition to a Wi-Fi communication module and a Bluetooth communication module, communication modules using short-range communication technologies such as Bluetooth Low Energy (BLE), radio frequency identification (RFID), Infrared Data Association (IrDA), ultra-wideband (UWB), and ZigBee.

Under the control of the processor 150, the communication interface 110 may receive a request and transmit a response for information for screen control authority by being connected to a source device via the short-range communication module 113.

The I/O interface 120 may, under the control of the processor 150, receive video (e.g., moving images, etc.), audio (e.g., voice, music, etc.), and additional information (e.g., electronic program guide (EPG), etc.) from outside the display device 100. The I/O interface 120 may include one of an HDMI port 121, a component jack 122, a PC port 123, and a USB port 124, or a combination of one or more thereof. The I/O interface 120 may further include, in addition to the HDMI port, a DP, a Thunderbolt, and an MHL.

By being connected to one or more source devices via one or more HDMI ports, the I/O interface 120 may receive screen data from the connected one or more source devices.

The I/O interface 120 may receive input data from the input device by connecting to the input device via a USB port.

The I/O interface 120 may connect to one or more source devices via one or more USB ports. The I/O interface 120, under the control of the processor 150, may transmit input data from the input device 200 to a source device having screen control authority among the one or more connected source devices.

The display 130 may output images or data processed by the display device 100.

The image processor 135 may, under the control of the processor 150, process an image signal and output the processed image signal to the display 130.

The memory 140 may store programs necessary for processing or control by the processor 150, and store data input to or output from the display device 100. Furthermore, the memory 140 may store data necessary for operation of the display device 100.

The memory 140 may include at least one type of storage medium from among a flash memory-type memory, a hard disk-type memory, a multimedia card micro-type memory, a card-type memory (e.g., an SD card or an XD memory), RAM, SRAM, ROM, EEPROM, PROM, a magnetic memory, a magnetic disk, and an optical disk.

The processor 150 controls all operations of the display device 100. For example, the processor 150 may execute one or more instructions stored in the memory 140 to perform functions of the display device 100 described in the present disclosure.

In an embodiment of the present disclosure, the processor 150 may store one or more instructions in an internal memory provided therein, and execute the one or more instructions stored in the internal memory to control operations of the display device to be performed. In other words, the processor 150 may execute at least one instruction or program stored in the internal memory provided in the processor 150 or the memory 140 to perform predetermined operations.

The processor 150 controls all the operations of the display device 100 and a flow of signals between the internal components (not shown) of the display device 100, and performs a function of processing data. When there is an input by the user or preset and stored conditions are satisfied, the processor 150 may execute an operating system (OS) and various applications stored in the memory 140.

The processor 150 may include a graphics processing unit (GPU) (not shown) for processing graphics corresponding to video. The GPU generates a screen including various objects such as icons, images, and text by using a computation unit (not shown) and a rendering unit (not shown). The computation unit calculates attribute values such as coordinate values, shape, size, and color for each object to be displayed according to a layout of the screen by using a user interaction detected via a detection unit 190. The rendering unit generates screens with various layouts including objects based on the attribute values calculated by the computation unit.

According to an embodiment, the processor 150 may execute one or more instructions stored in the memory 140 to perform operations of the display device 100 described in the present disclosure.

The audio processor 160, under the control of the processor 150, may convert an audio signal into an analog audio signal and output the analog audio signal to the audio output interface 170.

The audio output interface 170 may output input audio (e.g., voice or sound). Furthermore, the audio output interface 170 may output audio stored in the memory 140 under control of the processor 150. The audio output interface 170 may include at least one of a speaker, a headphone output terminal, or a Sony/Phillips Digital Interface (S/PDIF) output terminal, or a combination thereof.

The switching circuit 180 may include hardware and software configured to perform, under the control of the processor 150, the function of switching a path of input data received from the input device 200 to provide the input data to an appropriate source device.

The detection unit 190 is a component for detecting the user's voice, images, or interactions, and may include a camera, a microphone, and an optical receiver.

In detail, the camera may receive images (e.g., consecutive frames) corresponding to the user's motion including his or her gesture within a recognition range of the camera. The processor 150 may select a menu displayed on the display device 100 by using a received motion recognition result or perform control corresponding to the motion recognition result.

The microphone may receive a voice uttered by the user. The microphone may convert the received voice into an electrical signal and output the electrical signal to the processor 150. The user's voice may include, for example, a voice corresponding to a menu or function of the display device 100.

The optical receiver receives an optical signal (including a control signal) received from an external control device. The optical receiver may receive, from the control device, an optical signal corresponding to a user input (e.g., touching, pressing, touch gesture, voice, or motion). A control signal may be extracted from the received optical signal under the control of the processor 150.

Although not shown, the display device 100 may further include a user input interface. The user input interface may be any form of interface capable of receiving a user input. For example, the user input interface may include manipulation buttons arranged on a portion of the display device 100 to receive a user input, a touch-sensitive display configured to detect a touch input, a microphone capable of receiving a voice uttered by the user, etc.

The display device 100 may be any type of device that performs functions by including a processor and memory. The display device 100 may be a stationary or portable device. For example, the display device 100 may refer to a device having a display that is capable of displaying image content, video content, game content, graphic content, etc. The display device 100 may output or display an image or content received from the source device 300. For example, the display device 100 may include various types of electronic devices capable of receiving and outputting content, such as televisions (TVs) such as network TVs, smart TVs, Internet TVs, web TVs, and IPTVs, computers such as desktops, laptops, and tablets, various smart devices such as smartphones, cellular phones, game players, music players, video players, medical equipment, and home appliances, etc. The display device 100 may be referred to as a display device because it receives and displays content, and may also be referred to as a content receiving device, a sink device, an electronic device, a computing device, etc.

The block diagram of the display device 100 illustrated in FIG. 3 is a block diagram for an embodiment. Each of the components in the block diagram may be integrated, added, or omitted according to the specification of the display device 100 that is actually implemented. For example, two or more components may be combined into a single component, or a single component may be subdivided into two or more components, as needed. Furthermore, functions performed by each block are intended to describe embodiments, and a specific operation or device related to the functions does not limit the scope of the present disclosure.

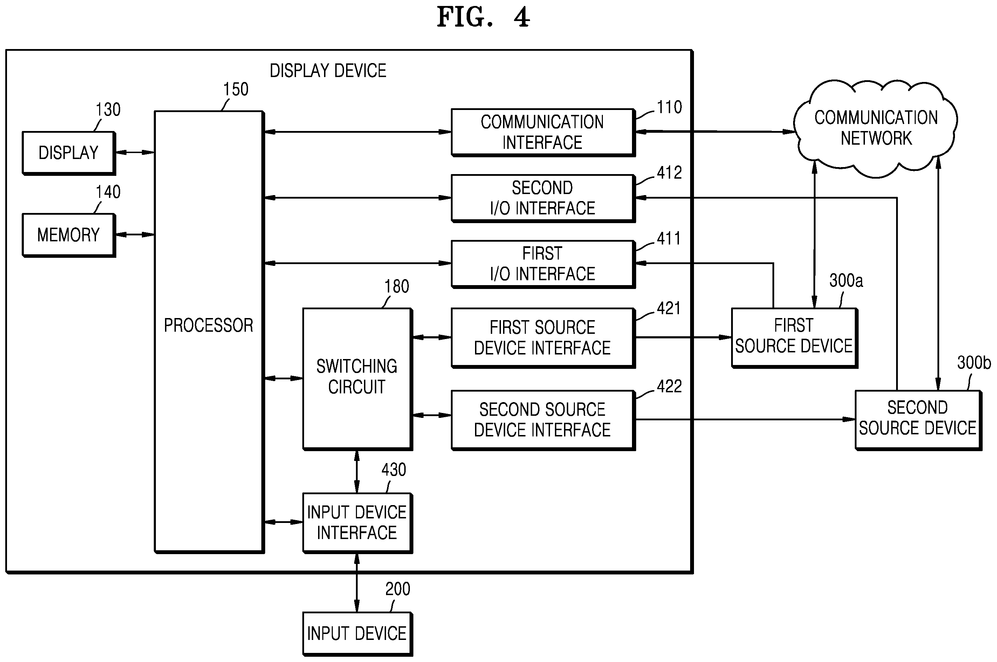

FIG. 4 is a block diagram of an example of a display device, according to an embodiment.

Referring to FIG. 4, a display device 100 may include a communication interface 110, a display 130, memory 140, a processor 150, a switching circuit 180, a first I/O interface 411, a second I/O interface 412, a first source device interface 421, a second source device interface 422, and an input device interface 430.

The communication interface 110 may communicate with a first source device 300a or a second source device 300b by using short-range communication technology. Under the control of the processor 150, the communication interface 110 may communicate with the first source device 300a or the second source device 300b in order to receive a request for information for switching screen control authority or to transmit the information for switching screen control authority.

The first I/O interface 411 may serve to connect the first source device 300a to the display device 100. The first I/O interface 411 may be included in the I/O interface 120 illustrated in FIG. 3, and for example, the first I/O interface 411 may include an HDMI port. The first I/O interface 411 may, under the control of the processor 150, receive screen data transmitted from the first source device 300a.

The second output interface 412 may serve to connect the second source device 300b to the display device 100. The second I/O interface 412 may be included in the I/O interface 120 illustrated in FIG. 3, and for example, the second I/O interface 412 may include an HDMI port. The second I/O interface 412 may, under the control of the processor 150, receive screen data transmitted from the second source device 300b.

The first source device interface 421 may serve to connect the first source device 300a to the display device 100. The first source device interface 421 may be included in the I/O interface 120 illustrated in FIG. 3, and for example, the first source device interface 421 may include a USB port. The first source device interface 421 may, under the control of the processor 150, transmit input data received from the input device 200 to the first source device 300a.

The second source device interface 422 may serve to connect the second source device 300b to the display device 100. The second source device interface 422 may be included in the I/O interface 120 illustrated in FIG. 3, and for example, the second source device interface 422 may include a USB port. The second source device interface 422 may, under the control of the processor 150, transmit input data received from the input device 200 to the second source device 300b.

The input device interface 430 may serve to connect the input device 200 to the display device 100. The input device interface 430 may be included in the I/O interface 120 illustrated in FIG. 3, and for example, the input device interface 430 may include a USB port. The input device interface 430 may receive input data from the input device 200 under the control of the processor 150.

The switching circuit 180 may perform an operation of switching a path of input data received from the input device 200 to an appropriate source under the control of the processor 150. For example, when a source having screen control authority is the display device, the switching circuit 180 may, under the control of the processor 150, provide the input data from the input device 200 to the processor 150. For example, under the control of the processor 140, when the source having the screen control authority is switched from the display device to the first source device 300a, the switching circuit 180 may switch a path of the input data from the input device 200 so that the input data is transmitted through the first source device interface 421.

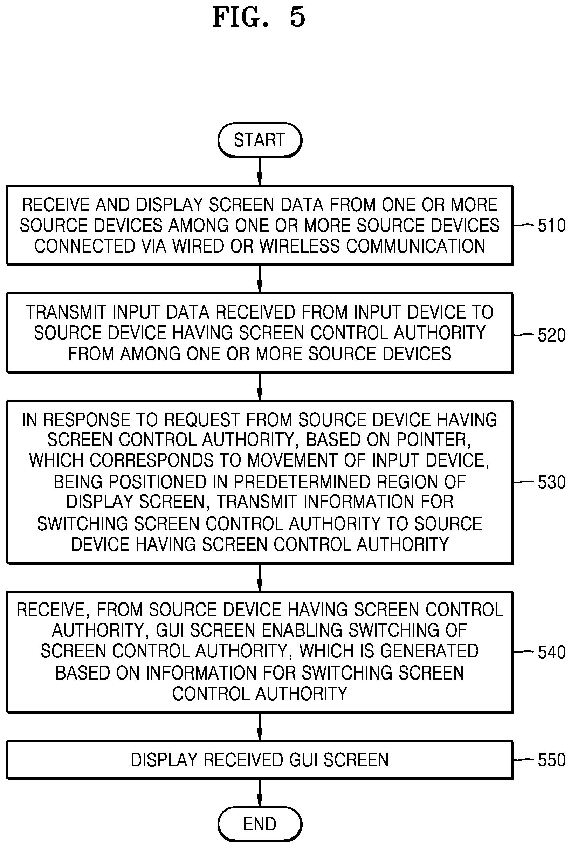

FIG. 5 is a flowchart of an example of an operation method of a display device, according to an embodiment.

Referring to FIG. 5, in operation 510, the display device 100 may receive and display screen data from one or more source devices among one or more source devices connected thereto via wired or wireless communication.

According to an embodiment, the display device 100 may receive and display screen data from one or more source devices among one or more source devices connected thereto via wireless communication such as Bluetooth communication or Wi-Fi communication, or receive and display screen data from one or more source devices among one or more source devices connected thereto via an I/O interface such as HDMI.

According to an embodiment, the display device 100 may output a single-view screen or a multi-view screen by using screen data from one or more source devices. For example, the display device 100 may output screen data received from a source device as a single-view screen, or output a multi-view screen by using screen data received from one or more source devices.

In operation 520, the display device 100 may transmit input data received from the input device to a source device having screen control authority among the one or more source devices. The screen control authority may represent the authority to control screen data displayed on a display of the display device 100. For example, while screen data obtained by the display device itself is displayed on the display of the display device 100, the display device 100 may have control over the screen data, and thus may have screen control authority. For example, while the display device 100 displays screen data received from a first source device, the first source device may have control over the screen data, and thus may have screen control authority. For example, when the display device 100 displays a multi-view screen, there may be one or more source devices that provide screen data to the display device 100. In this case, among a plurality of sub-view screens constituting the multi-view screen, a source device corresponding to a sub-view screen where a cursor is positioned, i.e., a source device providing screen data to the sub-view screen where the cursor is positioned, may have screen control authority.

In operation 530, in response to a request from the source device having the screen control authority, based on a pointer, which corresponds to movement of the input device, being positioned in a predetermined region of a display screen, the display device 100 may transmit information for switching the screen control authority to the source device having the screen control authority.

According to an embodiment, when the source device having the screen control authority receives, from the display device 100, the input data from the input device 200, the source device may determine, based on the input data, whether a pointer corresponding to movement of the input device is positioned in a predetermined region of the display screen. The source device having the screen control authority may detect a position corresponding to movement of the input device from the input data, and determine whether this position, i.e., a position of the pointer, falls within the predetermined region of the display screen. Although the predetermined region may be determined in various ways, for example, the predetermined region may represent a region extending a predetermined distance from an edge of the display screen.

According to an embodiment, based on determining that the pointer corresponding to the movement of the input device is positioned in the predetermined region of the display screen, the source device having the screen control authority may transmit, to the display device 100, a request to send information for switching the screen control authority.

According to an embodiment, by using, as a trigger, an event in which it is detected that the pointer corresponding to the movement of the input device is positioned in the predetermined region of the display screen, the source device having the screen control authority may execute specific software, and transmit, through the specific software, a request for information for switching the screen control authority.

According to an embodiment, the source device having the screen control authority may transmit, to the display device 100, a request for information for switching the screen control authority by using short-range wireless communication technology. For example, the source device having the screen control authority may use an access point (or AP) to transmit, to the pre-registered display device 100, a request for information for switching the screen control authority via Wi-Fi communication technology.

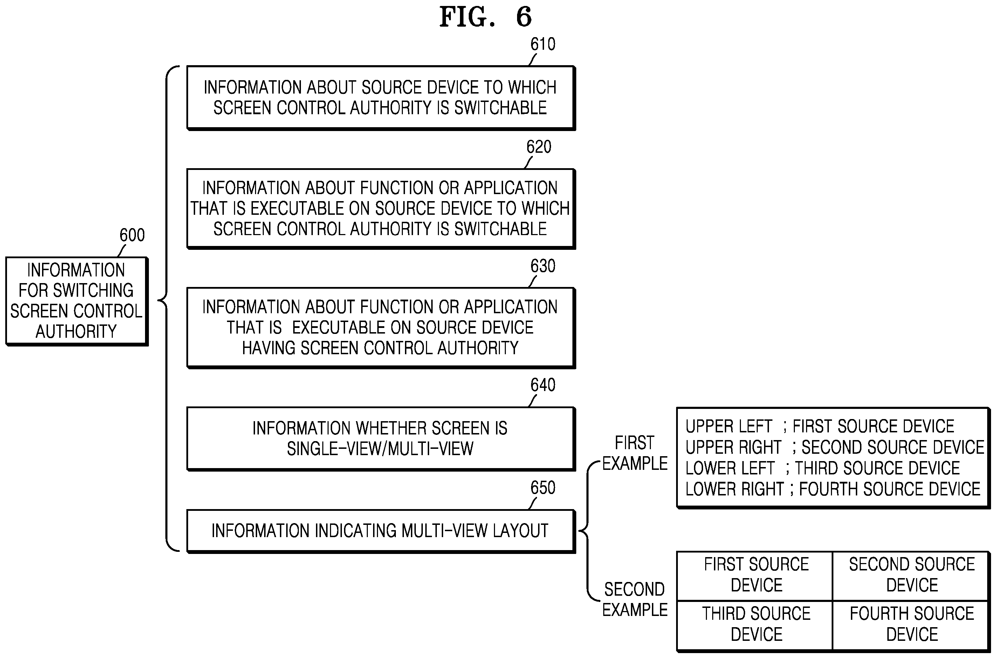

According to an embodiment, in response to the request from the source device having the screen control authority, the display device 100 may transmit the information for switching the screen control authority to the source device having the screen control authority. The information for switching the screen control authority may include information about one or more sources to which the screen control authority is switchable. The information about the one or more sources to which the screen control authority is switchable may include at least one of information about source device to which the screen control authority is switchable, information about a function or application that is executable on the source device to which the screen control authority is switchable, and information about a function or application that is executable on the source device having the screen control authority. The information for switching the screen control authority is described in detail with reference to FIG. 6.

FIG. 6 illustrates an example of information for switching screen control authority, according to an embodiment.

Referring to FIG. 6, information 600 for switching screen control authority is information about one or more sources to which the screen control authority is switchable, and may include at least one of information 610 about a source device to which the screen control authority is switchable, information 620 about a function or application that is executable on the source device to which the screen control authority is switchable, and information 630 about a function or application that is executable on a source device having the screen control authority. The information 600 for switching the screen control authority may optionally further include information 640 indicating whether the screen is single-view/multi-view, or information 650 indicating a multi-view layout.

The information 610 about the source device to which the screen control authority is switchable may indicate identification information of one or more source devices, other than the source device currently having the screen control authority, which are capable of providing screen data to a display device, or identification information of the display device. For example, in the example of FIG. 4, when the first source device 300a is the source device currently having the screen control authority and the second source device 300b is connected to the display device, the information 610 about the source device to which the screen control authority is switchable may include at least one of identification information of the second source device and identification information of the display device. Based on information about a source device to which the screen control authority is switchable, when the source device to which the screen control authority is to be switched is subsequently selected, the display screen may return to a most recent screen of the selected source device. For example, when the second source device is selected as a source to which the screen control authority is to be switched, the display screen may return to a most recent screen of the selected second source device. For example, when the display device is selected as a source to which the screen control authority is to be switched, the display screen may return to a most recent screen of the display device.

The information 620 about the function or application that is executable on the source device to which the screen control authority is switchable may indicate identification information of functions or applications that are executable on the one or more source devices, other than the source device currently having the screen control authority, which are capable of providing screen data to the display device, or identification information of a function or application that is executable on the display device. For example, the identification information of functions or applications that are executable on the one or more other source devices may indicate information about a home screen or a content-providing application that is executable on the one or more other source devices. For example, when a home screen that is executable on the second source device is selected as a source to which the screen control authority is to be switched, the display screen may return to the home screen of the selected second source device. For example, when a YouTube application that is executable on the second source device is selected as a source to which the screen control authority is to be switched, the display screen may return to a screen of the YouTube application on the selected second source device.

Although switching of a source does not strictly occur, the information 630 about a function or application that is executable on the source device having the screen control authority may be included for user convenience. For example, information about a function or application that is executable on the source device having the screen control authority may represent a screen control authority settings screen where settings related to the screen control authority can be configured on the source device having the screen control authority.

The information 640 indicating whether the screen is a single-view/multi-view refers to information indicating whether the current display screen of the display device is a single-view or a multi-view. For example, the information 640 indicating whether the screen is a single-view/multi-view may be used to switch screen control authority. For example, when the information 640 indicating whether the screen is a single-view/multi-view indicates a multi-view, the display device 100 may be implemented to always transfer the screen control authority to the source device 300, or when the information 640 indicating whether the screen is a single-view/multi-view, the display device 100 may operate to output a predetermined GUI. The predetermined GUI may include, for example, an item that allows navigation to a home screen of the display device.

When the current display screen of the display device is a multi-view screen, the information 650 indicating the multi-view layout may include information indicating each sub-view constituting the multi-view screen and a correspondence relationship of each sub-view. The correspondence relationship between each sub-view and its corresponding source device may be expressed in various ways. For example, referring to FIG. 6, as in a first example, the correspondence relationship may be described in text form, such that the upper left corresponds to a first source device, the upper right corresponds to a second source device, the lower left corresponds to a third source device, and the lower right corresponds to a fourth source device. Alternatively, as in a second example, the correspondence relationship may be represented in a graphical form.

When the display screen of the display device is a multi-view, the information 600 for switching the screen control authority may include the information 640 indicating whether the screen is a single-view/ multi-view and the information 650 indicating the multi-view layout.

Referring back to FIG. 5, in operation 540, the display device 100 may receive, from the source device having the screen control authority, a GUI screen enabling switching of the screen control authority, which is generated based on the information for switching the screen control authority.

According to an embodiment, the source device having the screen control authority, which has received the information for switching the screen control authority from the display device 100, may generate a GUI screen that enables switching of the screen control authority based on the information for switching the screen control authority. The GUI screen that enables switching of the screen control authority may include one or more items corresponding to the one or more sources included in the information for switching the screen control authority.

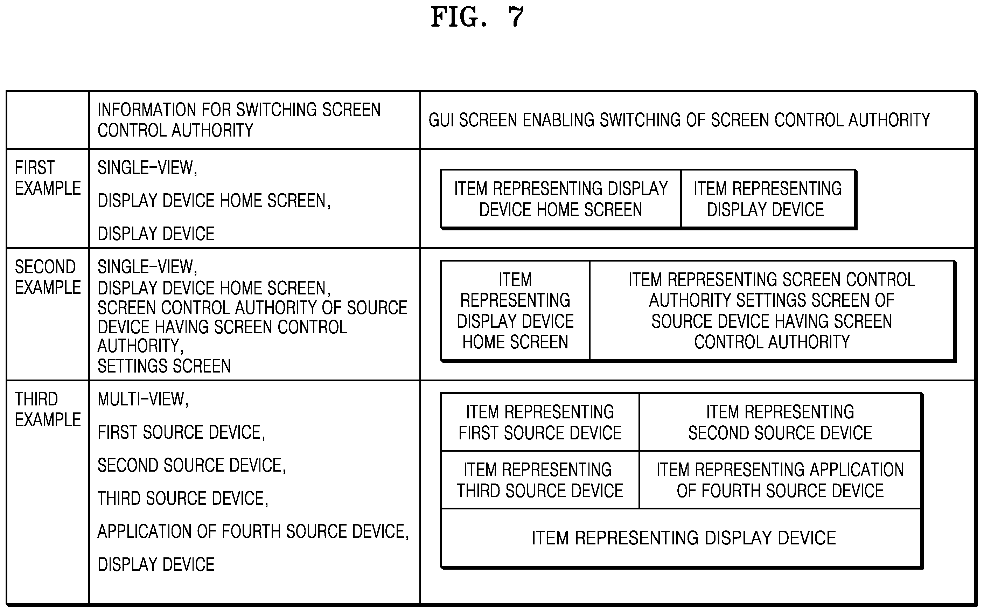

FIG. 7 illustrates information for switching screen control authority and examples of GUI screens that enable switching of the screen control authority, according to an embodiment.

Referring to FIG. 7, in a first example, a source device having screen control authority may receive, from a display device, information indicating that a screen is a single-view, information indicating a home screen of the display device, and information indicating the display device, as information for switching the screen control authority. In this case, the source device having the screen control authority may generate a GUI screen including an item representing the home screen of the display device and an item representing the display device. When the item representing the home screen of the display device is selected, the home screen of the display device may serve as a source, whereas when the item representing the display device is selected, a current state of the display device, i.e., a most recent screen, may serve as a source.

In a second example, the source device having the screen control authority may receive, from the display device, information indicating that the screen is a single-view, information indicating the home screen of the display device, and a screen control authority settings screen of the source device having the screen control authority, as information for switching the screen control authority. In this case, the source device having the screen control authority may generate a GUI screen including an item representing the home screen of the home screen of the display device and an item representing the screen control authority settings screen of the source device having the screen control authority. When the item representing the home screen of the display device is selected, the home screen of the display device may serve as a source. When the item representing the screen control authority settings screen of the source device having the screen control authority is selected, the screen control authority settings screen of the source device having the screen control authority may serve as a source.

In a third example, the source device having the screen control authority may receive, from the display device, information indicating that the screen is a multi-view, information indicating a first source device, information indicating a second source device, information indicating a third source device, information representing an application of a fourth source device, and information indicating the display device, as information for switching the screen control authority. In this case, the source device having the screen control authority may generate a GUI screen including an item representing the first source device, an item representing the second source device, an item representing the third source device, and an item representing an application of a fourth source device. When the first source device is the source device currently having the screen control authority, and the item representing the second source device is selected, a cursor may be moved onto a second sub-view corresponding to the second source device. The same applies to the item representing the third source device. When the item representing the application of the fourth source device is selected, the cursor may be moved to a fourth sub-view corresponding to the fourth source device, and an application screen of the fourth source device may serve as a source. When the item representing the display device is selected, because the current screen of the display device is a multi-view screen, a shape of a cursor used in the display device may be displayed on the multi-view screen.

Referring back to FIG. 5, in operation 550, the display device 100 may display the GUI screen that enables switching of the screen control authority, which is received from the source device having the screen control authority.

According to an embodiment, the display device 100 may display the GUI screen enabling switching of the screen control authority in a Picture-in-Picture (PIP) format or in a pop-up window format.

In this way, as the GUI screen enabling the switching of the screen control authority is output to the display device, the user may select a source to which the screen control authority is to be switched. The display device 100 may then control the screen control authority to be switched according to the selection input.

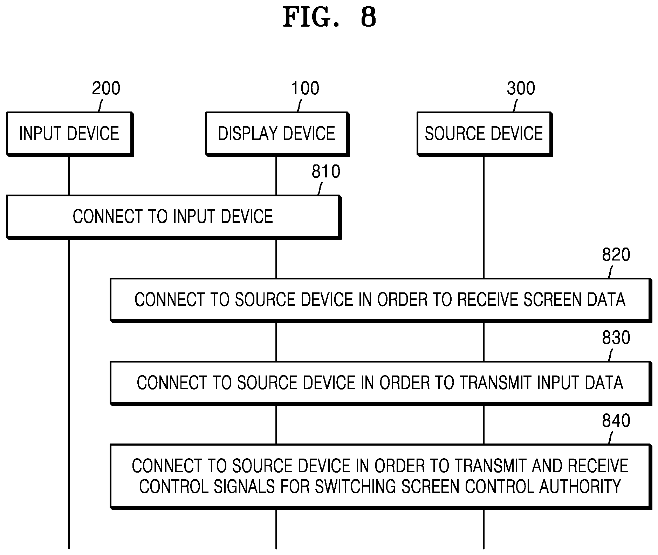

Embodiments are described in detail below with reference to FIGS. 8 to 21.

FIG. 8 is a flowchart of an example of an operation method for connecting an input device and a source device to a display device, according to an embodiment.

Referring to FIG. 8, in operation 810, the display device 100 may perform an operation of connecting to the input device 200.

According to an embodiment, the display device 100 may connect to the input device 200, which provides input data, according to a wired or wireless communication technology.

According to an embodiment, the display device 100 may connect to the input device 200 by using one of USB communication, Bluetooth communication, and Wi-Fi communication.

According to an embodiment, when the connection is made using USB communication, a downstream USB port on the display device 100 may be connected to an upstream USB port on the input device 200 by using a USB cable. According to this connection, the display device 100 may recognize the input device 200 as a Human Interface Device (HID). USB is a concept of grouping devices with similar data reporting characteristics into device classes and having a single class driver for each group, instead of having separate software drivers for each new computer peripheral. Devices also have the capability to describe to the class driver what controls they have and how they report data. An HID device may represent a device that provides services for inputting and outputting human data to and from a host. Examples of HIDs may include a mouse, a joystick, a gamepad, a keyboard, or a voltmeter and a temperature sensor. The input device 200 and the display device 100 may be connected by plugging the USB cable connected to the upstream USB port of the input device 200 into the downstream USB port of the display device 100. When the input device 200 and the display device 100 are connected via the USB cable, the display device 100 may recognize that a device, i.e., the input device 200, has been plugged in. The display device 100 may request device information from the input device 200. Then, the input device 200 may transmit to the display device 100 a device descriptor containing information about the input device. Information about a control device contained in the device descriptor may include a vendor ID, a product ID, and firmware version information of the input device 200. The display device 100 may recognize information about the input device 200 from the device descriptor and load an appropriate HID class driver for the input device 200. The HID class driver may select a configuration for the device, i.e., a configuration for the input device 200, and transmit a configuration settings request to the input device 200. The input device 200 may be configured according to the configuration settings. Through such an operation, the display device 100 may recognize the input device 200 connected to its downstream USB port as an HID.

In operation 820, the display device 100 may perform an operation of connecting to the source device 300 in order to receive screen data from the source device 300.

According to an embodiment, the display device 100 may connect to the source device 300, which provides screen data, according to a wired or wireless communication technology.

According to an embodiment, the display device 100 may connect to the source device 300 by using an HDMI port.

In operation 830, the display device 100 may perform an operation of connecting to the source device 300 in order to transmit input data to the source device 300.

According to an embodiment, the display device 100 may connect to the source device 300 according to a wired or wireless communication technology in order to transmit input data received from the input device 200 to the source device 300.

According to an embodiment, the display device 100 may connect to the source device 300 by using one of USB communication, Bluetooth communication, and Wi-Fi communication in order to transmit, to the source device 300, input data received from the input device 200.

According to an embodiment, when the connection is made using USB communication, an upstream USB port of the display device 100 may be connected to a downstream USB port of the source device 300 by using a USB cable.

In operation 840, the display device 100 may perform an operation of connecting to the source device 300 in order to transmit and receive control signals for switching screen control authority. In this case, an active connection operation may be performed by the source device 300, and according to the connection operation, the display device 100 may be connected to the source device 300.

According to an embodiment, the display device 100 may perform an operation of connecting to the source device 300 based on various short-range communication technologies in order to transmit and receive control signals for switching screen control authority. The various short-range communication technologies may include Bluetooth communication technology, Wi-Fi communication technology, etc.

According to an embodiment, the source device 300 may search for display devices connected to an access point to which it is connected and pre-register a discovered display device. In this way, by pre-registering information about the display device connected to the AP, the source device 300 may use the pre-registered information of the display device when subsequently needing to transmit and receive control signals for switching screen control authority.

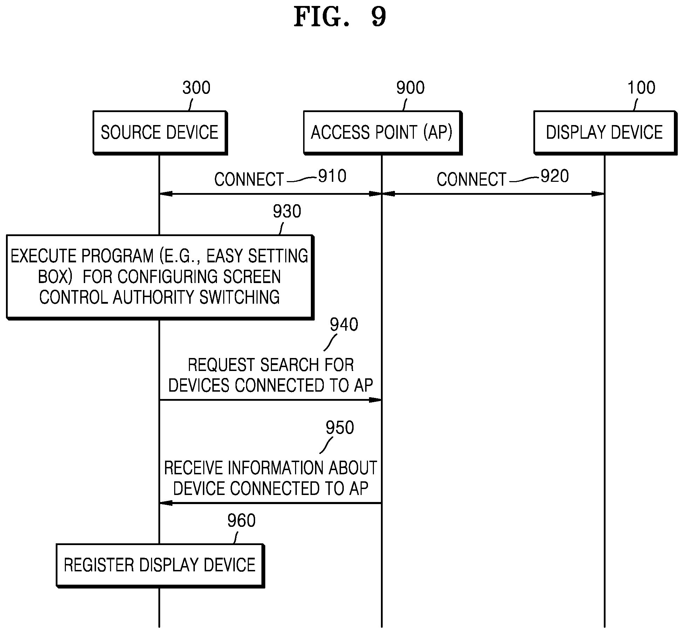

FIG. 9 is a flowchart of an example of an operation method for connecting a display device and a source device in order to transmit and receive control signals for switching screen control authority, according to an embodiment.

Referring to FIG. 9, in operation 910, the source device 300 may perform an operation of connecting to an access point 900.

In operation 920, the display device 100 may perform an operation of connecting to the access point 900.

In operation 930, the source device 300 may execute a program for configuring screen control authority switching. The source device 300 may download from a server and store the program for configuring screen control authority switching. Based on the execution of the program for configuring screen control authority switching, the source device 300 may perform subsequent operations.

In operation 940, the source device 300 may transmit, to the access point 900, a request to search for devices connected to the access point.

In operation 950, the source device 300 may receive, from the access point 900, information about one or more devices connected to the access point. The information about the one or more devices connected to the access point may include information about the display device connected according to operation 920.

In operation 960, the source device 300 may register one or more devices based on the information about the one or more devices connected to the access point, which is received from the access point. In this case, the source device 300 may register the display device 100 as a device connected to the access point.

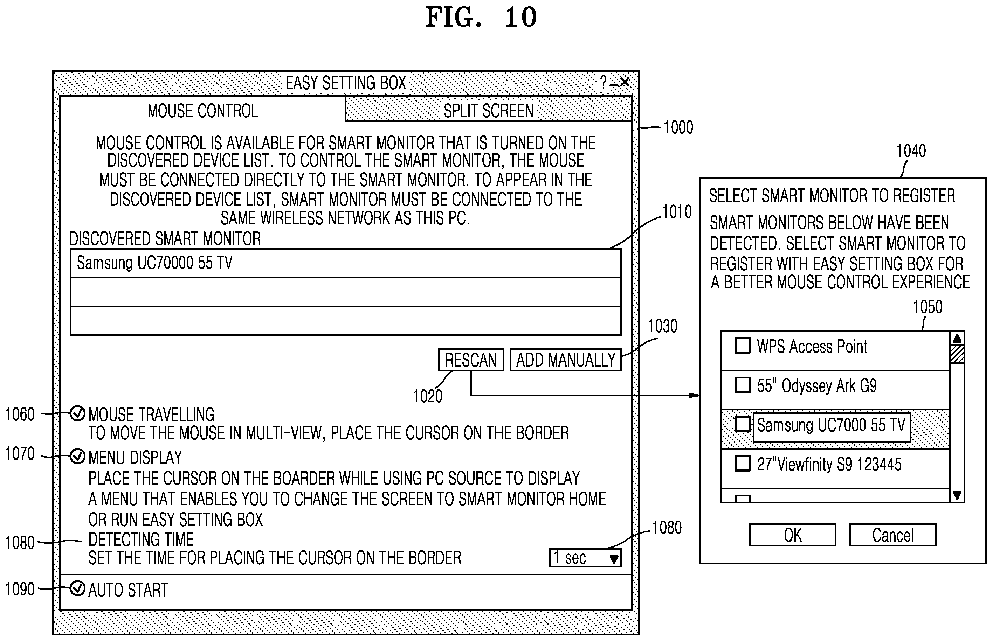

FIG. 10 illustrates an example of a user interface screen that allows configuration of settings related to screen control authority switching at a source device, according to an embodiment.

Referring to FIG. 10, a user interface screen 1000 (hereinafter referred to as a screen control authority switching settings screen) for configuring settings related to screen control authority switching may include a window 1010 for displaying one or more registered devices, a button 1020 for instructing to search for devices connected to an AP, a button 1030 for manually registering a device, a checkbox 1060 for selecting whether to use a screen control authority switching function in a multi-view, a checkbox 1070 for selecting whether to use the screen control authority switching function in a multi-view, a window 1080 for inputting a time for which a cursor remains on an edge of a display screen for screen control authority switching, and a checkbox 1090 for selecting whether the screen control authority switching function is to be used upon initial startup of the source device.

The window 1010 for displaying one or more registered devices may show a device selected by a user from among devices connected to the access point to which the source device is connected.

The button 1020 for instructing to search for devices connected to the access point is a button for instructing to rescan for devices connected to the AP, and when a user selects the button 1020, the source device 300 may display a window 1040 for displaying one or more newly discovered devices. That is, when the button 1020 is selected by the user, the source device 300 transmits, to the access point, a request to search for devices connected to the access point, and when receiving, in response thereto, information about one or more devices connected to the access point, the source device 300 may display the window 1040 for displaying one or more newly discovered devices. One or more devices selected by the user from among the one or more devices displayed in the window 1040 may be registered with the source device and displayed in the window 1010.

The button 1030 for manually registering a device may represent a button that allows the user to manually register a device he or she desires to register with the source device.

The checkbox 1060 for selecting whether to use a screen control authority switching function in the multi-view is provided to allow the user to select whether the source device is to detect that a cursor is positioned on an edge of a sub-view screen where the cursor is operating while the display operates in the multi-view, and to use the detection to trigger the screen control authority switching function. In response to an input for setting the checkbox 1060 to a selected state, when detecting that the cursor is positioned on the edge of the sub-view screen where the cursor is operating while the display device operates in the multi-view, the source device may trigger the screen control authority switching function. In response to an input for setting the checkbox 1060 to a non-selected state, the source device does not detect that the cursor is positioned on the edge of a sub-view screen where the cursor is operating while the display device operates in the multi-view.

The checkbox 1070 for selecting whether to use the screen control authority switching function is provided to allow the user to select whether the source device is to detect that the cursor is positioned on an edge of the display screen, and to use the detection to trigger the screen control authority switching function. In response to an input for setting the checkbox 1070 to a selected state, when it is detected that the cursor is positioned on the edge of the display screen, the source device may use the detection to trigger the screen control authority switching function. In response to an input for setting the checkbox 1070 to a non-selected state, the source device does not detect that the cursor is positioned on the edge of the display screen.

The input window 1080 for inputting the time for which the cursor remains on the edge of the display screen for screen control authority switching may be an input window that allows the user to set, when the checkbox 1060 or the checkbox 1070 are selected, a time interval indicating how long the cursor must remain on the edge of the display screen in order for the source device to detect that the cursor is positioned on the edge of the display screen. For example, when the user sets 1 second in the input window 1080, if the source device 300 detects that the cursor remains on the edge of the display screen for 1 second, the source device 300 may determine that the cursor is positioned on the edge of the display screen, and if the time for which the cursor remains on the edge of the display screen is less than 1 second, the source device may not detect that the cursor is positioned on the edge of the display screen.

The auto start checkbox 1090 represents a checkbox that allows the user to select whether the screen control authority switching function is to be used upon an initial startup of the source device.

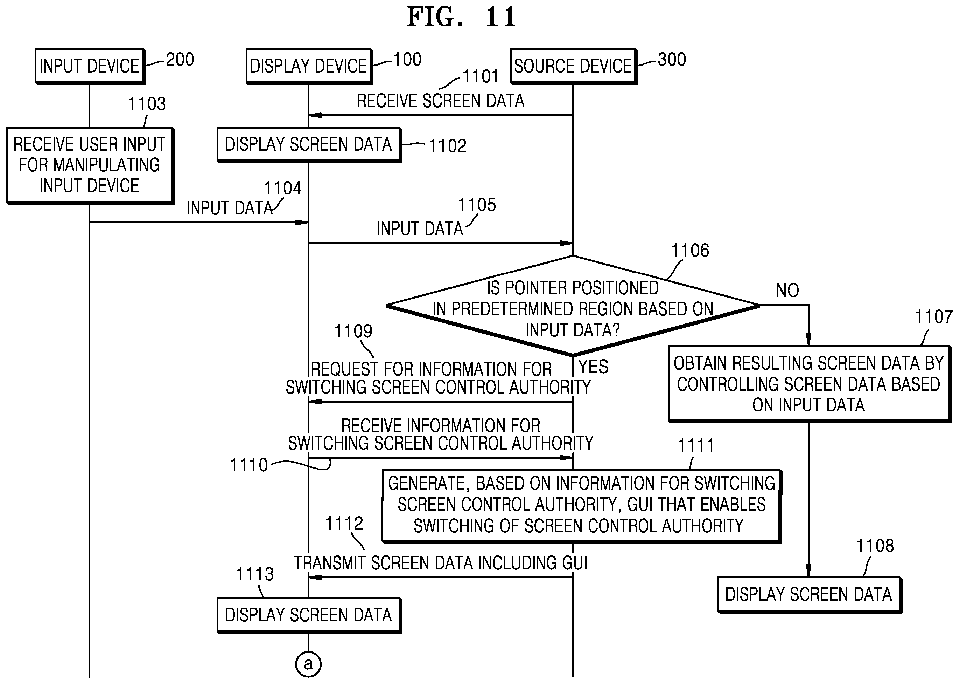

FIG. 11 is a flowchart of an example of an operation method of a display device and a source device for switching screen control authority, according to an embodiment.

Referring to FIG. 11, in operation 1101, the display device 100 may receive screen data from the source device 300. For example, the display device 100 may receive the screen data from the source device 300 based on HDMI communication.

In operation 1102, the display device 100 may display, on the display, the screen data received from the source device 300.

In operation 1103, the input device 200 may receive a user input for manipulating the input device to control the screen data while the display device 100 displays the screen data. For example, when the display device 100 displays a video such as a movie, the input device 200 may receive a user input for controlling a volume of the video, controlling a playback speed, or stopping or resuming playback of the video.

In operation 1104, the input device 200 may transmit, to the display device 100, input data corresponding to the received user input. For example, when the input device 200 is connected to the display device 100 via a USB interface, the input device 200 may convert the input data into a USB format and transmit the input data in the USB format to the display device 100.

In operation 1105, the display device 100 may transmit the input data received from the input device 200 to a source device, i.e., the source device 300, which has control authority over a screen currently displayed on the display. For example, when the display device 100 is connected to the source device 300 via a USB interface, the display device 100 may transmit the input data in the USB format as it is to the source device 300. When the display device 100 is connected to the source device 300 using a communication method different from USB, the display device 100 may convert the input data in the USB format into a format corresponding to the appropriate communication method and transmit the input data in the converted format to the source device 300.

In operation 1106, the source device 300 may detect whether a pointer is positioned in a predetermined region, based on the input data received from the display device 100. The display device 100 may detect, based on the input data, whether the pointer indicating a position corresponding to movement of the input device 200 remains in the predetermined region for a predetermined period of time. For example, the predetermined region may indicate an edge portion of the display screen.

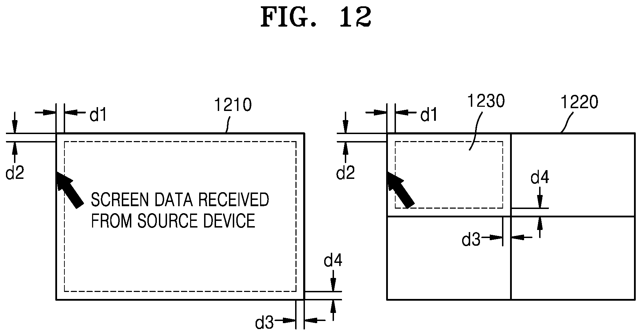

FIG. 12 is a diagram illustrating an example of a predetermined region of a display screen, according to an embodiment.

Referring to FIG. 12, a screen 1210 shows an example in which the screen of the display device 100 is a single-view screen. The single-view screen displayed on the display of the display device 100 may output screen data received from the source device 300. The source device 300 may receive input data and detect whether a position of the pointer corresponding to the input data is located in a predetermined region. Specifically, the source device 300 may detect whether the position of the pointer corresponding to the input data is located in the predetermined region for a predetermined period of time. The predetermined region may be determined in various ways from among regions of the screen. For example, the predetermined region may include an edge region of the screen. The edge region of the screen may represent a region extending a certain distance from an outermost end of the screen. The edge region of the screen may include one or more of a region extending a certain distance d1 from a left edge of the screen, a region extending a certain distance d3 from a right edge of the screen, a region extending a certain distance d2 from a top edge of the screen, and a region extending a certain distance d4 from a bottom edge of the screen. A screen 1220 shows an example in which the screen of the display device 100 is a multi-view screen. In the case of the multi-view screen, the predetermined region may be determined within a display screen 1230 corresponding to a source device currently having screen control authority. For example, the source device 300 may receive input data and detect whether the position of the pointer corresponding to the input data is located in the predetermined region of the screen 1230 corresponding to the source device 300. Specifically, the source device 300 may detect whether the position of the pointer corresponding to the input data is located in the predetermined region for the predetermined period of time. The predetermined region may be determined in various ways from among regions of the display screen 1230. For example, the predetermined region may include an edge region of the screen. The edge region of the screen may represent a region that extends a certain distance from an end of the screen. The edge region of the screen may include one or more of a region extending the certain distance d1 from a left edge of the screen, a region extending the certain distance d3 from a right edge of the screen, a region extending the certain distance d2 from a top edge of the screen, and a region extending the certain distance d4 from a bottom edge of the screen.

The source device 300 may detect whether the position of the pointer corresponding to the input data is located in such a predetermined region for a predetermined period of time. The predetermined period of time may be determined in various ways, for example, 1 second. The predetermined period of time for which the pointer must remain in the predetermined region for detection may be set by the user by using the input window 1080 in the screen control authority settings screen, as described with reference to FIG. 10. Although not illustrated in FIG. 10, depending on the implementation, information about the predetermined region may also be implemented to allow the user to set it in the screen control authority settings screen of FIG. 10.

When the source device 300 does not detect that the position of the pointer corresponding to the input data is located in the predetermined region for the predetermined period of time, the source device 300 may perform operation 1107.

In operation 1107, the source device 300 may obtain resultant screen data generated by controlling the screen data based on the input data. For example, when the screen data is movie content and the input data relates to a control for outputting subtitles, the source device 300 may obtain resultant screen data in which the subtitles are overlaid on the movie content. For example, when the screen data is game content and the input data relates to controlling movement of a character in the game content, the source device 300 may obtain resultant screen data in which the character is moved based on the input data.

When the source device 300 transmits the obtained resultant screen data to the display device 100 in operation 1108, the display device 100 may display the received resultant screen data.

When the source device 300 detects, in operation 1106, that the position of the pointer corresponding to the input data is located in the predetermined region for the predetermined period of time, the process may proceed to operation 1109.

In operation 1109, the source device 300 may transmit, to the display device 100, a request to transmit information for switching screen control authority. The information for switching screen control authority may refer to information about one or more sources to which the screen control authority is switchable in order to perform screen control authority switching. The sources to which the screen control authority is switchable may include not only the source device but also a functions or an application that is executable on the source device.

According to an embodiment, the source device 300 may transmit a request for the information for switching the screen control authority by using a different communication method than the communication method used by the source device 300 to transmit the screen data to the display device 100. The communication method used by the source device 300 to transmit the screen data to the display device 100 is a method using an HDMI interface or the like, and such a method may not be efficient for bidirectional communication. Therefore, as described above with reference to FIGS. 9 and 10, the source device 300 may pre-register the display device for communication using a short-range communication method. The source device 300 may transmit the request for information for switching the screen control authority to the pre-registered display device by using an AP.

In operation 1110, the display device 100 may receive, from the source device 300, the request for information for switching the screen control authority, and in response thereto, transmit the information for switching the screen control authority to the source device 300. The information for switching the screen control authority may indicate information about one or more sources to which the screen control authority is switchable. As described in detail above with reference to FIGS. 6 and 7, the information for switching the screen control authority may include at least one of information about a source device to which the screen control authority is switchable, information about a function or application that is executable on the source device to which the screen control authority is switchable, information about a function or application that is executable on a source device having the screen control authority, information indicating whether the screen is a single-view/multi-view, and information indicating a multi-view layout.

In operation 1111, the source device 300 may receive, from the display device 100, the information for switching the screen control authority, and generate, based on the information, a GUI that enables switching of the screen control authority. The source device 300 may generate a GUI including items corresponding to the respective sources by referring to the information about the one or more sources to which the screen control authority is switchable, which is included in the information for switching the screen control authority received from the display device 100. For example, when the information for switching the screen control authority includes information about four sources, a GUI generated based thereon may include items respectively corresponding to the four sources. For example, when the information for switching the screen control authority includes information indicating that the screen is a multi-view screen, a GUI generated based thereon may further include information indicating to which sub-view screen among a plurality of sub-view screens constituting the multi-view screen each source corresponds.

In operation 1112, the source device 300 may transmit screen data including the generated GUI to the display device 100.

In operation 1113, the display device 100 may display, on the display, the screen data including the received GUI screen. Then, the process may proceed to next operation ⓐ.

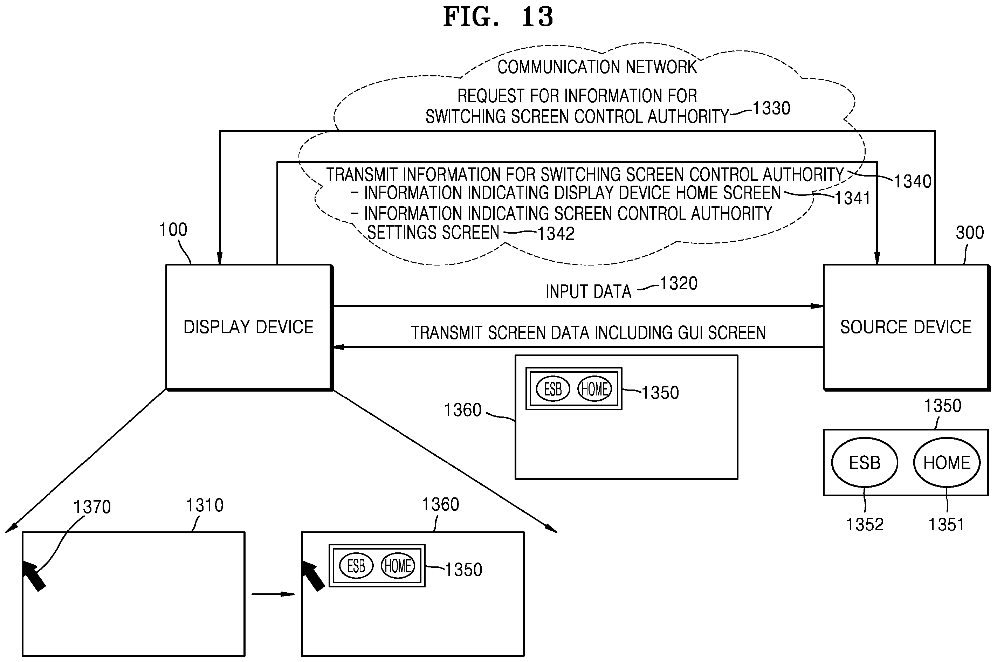

FIG. 13 illustrates an example of the operation method illustrated in FIG. 11.

Referring to FIG. 13, by being connected to the source device 300 via an HDMI interface or the like, the display device 100 may receive screen data 1310 provided from the source device 300 and display the screen data 1310 on the display. When the user desires to switch screen control authority, for example, to switch a screen currently displayed on the display device 100 to a screen of the display device itself rather than the screen data provided by the source device 300, the user may position the input device 200 at an edge of the display screen to use a screen control authority switching function. According to this operation, the input device 200 may transmit, to the display device 100, input data 1320 corresponding to the user's manipulation, and the display device 100 may transmit the received input data 1320 to the source device 300 currently having screen control authority by using USB communication or the like.

The source device 300 may detect that a pointer 1370 is positioned at the edge portion of the display screen by receiving and identifying the input data 1320. Based on such detection, the source device 300 may transmit, to the display device 100, a request 1330 for information for switching screen control authority by using short-range communication technology or the like.

In response to receiving the request 1330 for information for switching screen control authority from the source device 300, the display device 100 may transmit, to the source device 300, information 1340 for switching screen control authority. The information 1340 for switching the screen control authority may include, for example, information 1341 indicating a home screen of the display device and information 1342 indicating a screen control authority settings screen.

The source device 300 may generate a GUI that enables switching of the screen control authority, based on the information for switching the screen control authority received from the display device 100. For example, the source device 300 may obtain an item 1351 representing the home screen of the display device based on the information 1341 indicating the home screen of the display device, which is included in the information 1340 for switching the screen control authority, and an item 1352 representing the screen control authority settings screen based on the information 1342 indicating the screen control authority settings screen, and generate a GUI 1350 including the obtained items 1351 and 1352.

The source device 300 may transmit, to the display device 100, screen data 1360 including the GUI 1350 that enables switching of the screen control authority.

Then, the display device 100 may display, on the display, the screen data 1360 including the GUI 1350 that enables switching of the screen control authority.

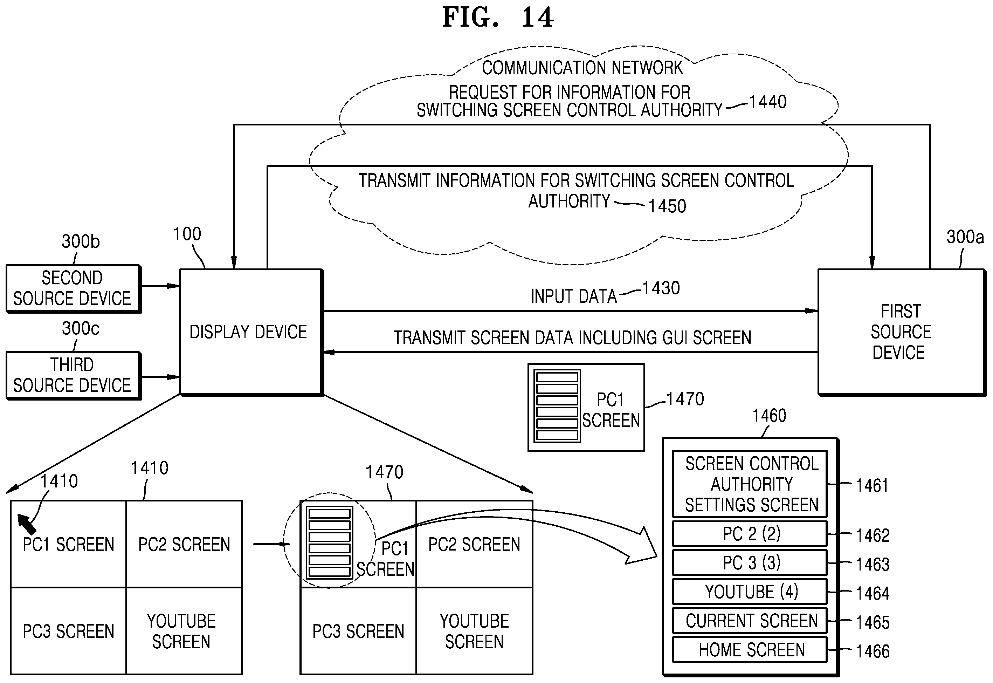

FIG. 14 illustrates an example of the operation method of FIG. 11.

Referring to FIG. 14, the display device 100 may receive screen data from a plurality of source devices by being connected to the plurality of source devices via HDMI interfaces or the like, and may display a multi-view. For example, a multi-view screen 1410 may include a plurality of sub-view screens, wherein a first sub-view screen may display screen data (e.g., PC1 screen) provided from a first source device 300a, a second sub-view screen may display screen data (e.g., PC2 screen) provided from a second source device 300b, a third sub-view screen may display screen data (e.g., PC3 screen) provided from a third source device 300c, and a fourth sub-view screen may display a screen (e.g., a YouTube screen) corresponding to a YouTube application executed on the display device. In addition, because the first source device 300a currently has the screen control authority, the multi-view screen 1410 shows that a cursor 1420 corresponding to the first source device 300a is displayed on the first sub-view screen.

When a user desires to switch the screen control authority, the user may position the input device 200 on an edge of the first sub-view screen to use a screen control authority switching function. According to this operation, the input device 200 may transmit, to the display device 100, input data corresponding to the user's manipulation, and the display device 100 may transmit the received input data 1430 to the first source device 300a currently having the screen control authority by using USB communication or the like.

The first source device 300a may detect that the pointer 1420 is positioned on the edge portion of the display screen, i.e., the first sub-view screen, by receiving and identifying the input data 1430. Based on such detection, the first source device 300a may transmit, to the display device 100, a request 1440 for information for switching screen control authority by using short-range communication technology or the like.

In response to receiving the request 1440 for information for switching screen control authority from the first source device 300a, the display device 100 may transmit, to the first source device 300a, information 1450 for switching screen control authority. The information 1450 for switching the screen control may include, for example, information indicating a screen control authority settings screen, information indicating a second source device, information indicating a third source device, information indicating a YouTube screen executed on the display device, information indicating a current screen of the display device, and information indicating a home screen of the display device.

The first source device 300a may generate a GUI 1460 that enables switching of the screen control authority, based on the information for switching the screen control authority received from the display device 100. For example, the first source device 300a may obtain an item 1461 representing the screen control authority settings screen based on the information indicating the screen control authority settings screen, which is included in the information 1460 for switching the screen control authority, an item 1462 representing the second source device (e.g., PC 2) based on the information indicating the second source device, an item 1463 indicating the third source device (e.g., PC 3) based on the information indicating the third source device, an item 1464 representing the YouTube application based on the information indicating the YouTube screen running on the display device, an item 1465 representing a current screen based on the information indicating the current screen of the display device, and an item 1466 representing a home screen based on the information indicating a home screen of the display device, and generate the GUI 1460 including the obtained items 1461 to 1466.

The first source device 300a may transmit, to the display device 100, screen data 1470 including the GUI 1460 that enables switching of the screen control authority.

Then, the display device 100 may display, on the first sub-view screen, the screen data 1470 including the GUI 1460 that enables switching of the screen control authority.

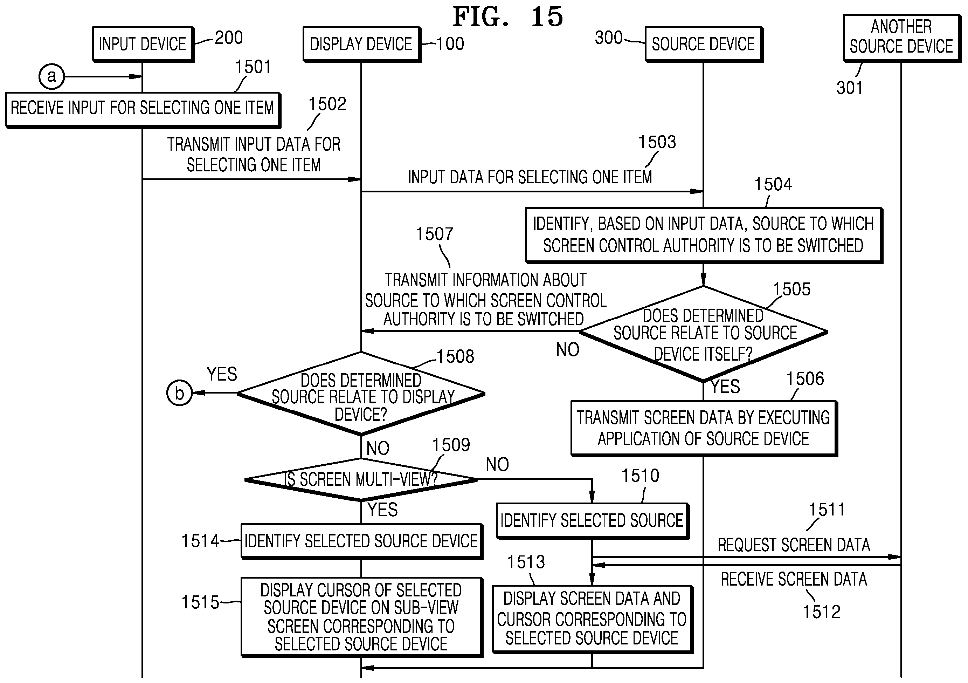

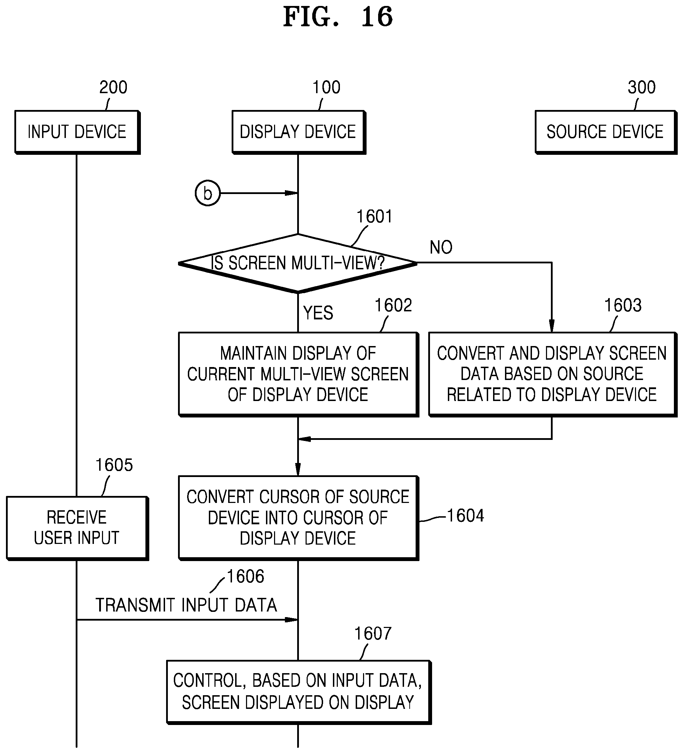

An operation method for selecting an item on a GUI that enables switching of screen control authority is now described with reference to FIGS. 15 and 16.

FIG. 15 is a flowchart illustrating an example of an operation method when selecting an item on a GUI that enables switching of screen control authority, according to an embodiment.

Referring to FIG. 15, in operation 1501, the input device 200 may receive an input for selecting one item from a user. While the display device 100 displays screen data including a GUI that enables switching of screen control authority, the user may perform an operation of selecting one item from among one or more items included in the GUI that enables switching of the screen control authority, and in response thereto, the input device 200 may receive an input for selecting the one item.

In operation 1502, the input device 200 may transmit input data for selecting (or indicating selection of) the one item to the display device 100.

In operation 1503, the display device 100 may transmit the input data for selecting the one item, which is received from the input device 200, to the source device 300 currently having the screen control authority.

In operation 1504, the source device 300 may identify, based on the input data received from the display device 100, a source to which the screen control authority is to be switched. The source device 300 may identify an item selected by the user based on the input data for selecting the one item, which is received from the display device 100, and determine a source corresponding to the identified item as a source to which the screen control authority is to be switched.

In operation 1505, the source device 300 may determine whether the identified source relates to an application running on the source device 300. For example, a GUI that enables switching of the screen control authority switching may include an item representing a screen control authority settings screen executed on the source device, and when the item representing the screen control authority settings screen is selected as a source, the source device 300 may determine that the identified source relates to the source device itself.

When it is determined, as a result of the determining in operation 1505, that the identified source relates to the source device itself, the process proceeds to operation 1506, and when it is determined that the identified source does not relate to the source device, the process may proceed to operation 1507.

In operation 1506, the source device 300 may execute an application of the source device itself corresponding to the selected item. This operation does not strictly mean switching of the source device, but the source device is maintained while a specific application is executed on the source device. For example, when an application of the source device corresponding to the selected item displays a screen control authority settings screen of the source device for user convenience, the source device 300 may obtain the screen control authority settings screen by executing the application for outputting the screen control authority settings screen and transmit it to the display device 100.

When it is determined, as a result of the determining in operation 1505, that the identified source does not relate to the source device, the process may proceed to operation 1507.

In operation 1507, the source device 300 may transmit, to the display device 100, information about the identified source to which the screen control authority is to be switched by using short-range communication technology.

In operation 1508, the display device 100 may receive, from the source device 300, the information about the source to which the screen control authority is to be switched, and determine, based on the received information, whether the source to which the screen control authority is to be switched is a source related to the display device. The source related to the display device may include at least one of a most recent screen of the display device, a home screen of the display device, or a function or application executable on the display device.

When it is determined, as a result of the determining in operation 1508, that the determined source relates to the display device, the process may proceed to operation ⓑ.

When it is determined, as a result of the determining in operation 1508, that the determined source does not relate to the display device, i.e., when it is determined that the determined source relates to a source other than the display device, the process may proceed to operation 1509.

In operation 1509, the display device 100 may determine whether the display screen is a multi-view. When it is determined that the display screen is a multi-view, the process may proceed to operation 1514, and when it is determined that the display screen is not a multi-view, the process may proceed to operation 1510.

In operation 1510, when it is determined that the display screen is not a multi-view, i.e., when it is determined that the display screen is a single-view, the display device 100 may identify a source device to which the screen control authority is to be switched, based on the information about the source to which the screen control authority is to be switched.

In operation 1511, the display device 100 may request screen data from the identified source device 301. In this case, based on the information about the source to which the screen control authority is to be switched, the request for screen data may include at least one of current screen data of the source device 301, home screen data of the source device 301, and execution screen data of an application of the source device 301.

In operation 1512, the display device 100 may receive, from the other source device 301, the requested screen data.

In operation 1513, the display device 100 may display the screen data received from the other source device 301. The screen data received from the other source device 301 may include a cursor corresponding to the other source device 301.

When it is determined in operation 1509 that the display screen is a multi-view, the process may proceed to operation 1514.

In operation 1514, the display device 100 may identify the selected source device.

In operation 1515, the display device 100 may display a cursor corresponding to the selected source device on a sub-view screen corresponding to the selected source device. In this manner, by causing a cursor displayed on a sub-view screen corresponding to the source device 300 to disappear and displaying a cursor on a sub-view screen corresponding to the other source device 301, it is possible to indicate that the screen control authority has been switched.

FIG. 16 is a flowchart illustrating an example of an operation method in a case where one item is selected on a GUI that enables switching of screen control authority, according to an embodiment.

When the display device 100 determines in operation 1508 of FIG. 15 that the source identified based on the input data relates to the display device itself, the display device 100 may perform operation 1601 of FIG. 16.

In operation 1601, the display device 100 may determine whether a current display screen of the display device is a multi-view screen. When determining that the display screen is a multi-view screen, the display device 100 may perform operation 1602, and when determining that the display screen is a single-view screen, the display device 100 may perform operation 1603.

In operation 1602, the display device 100 may maintain display of the current multi-view screen of the display device. Switching of the screen control authority while the display screen is a multi-view screen may refer to moving a cursor capable of controlling screen data onto a sub-view screen corresponding to the source to which the screen control authority is to be switched while maintaining the multi-view screen.

Switching of the screen control authority while the display screen is a multi-view screen refers to moving a cursor capable of controlling screen data onto a sub-view screen corresponding to the source to which the screen control authority is to be switched while maintaining the multi-view screen, and thus, the display device 100 may maintain display of the current multi-view screen.

Operation 1603 may be performed when the source selected based on the input data relates to the display device and the display screen is a single view screen.

In operation 1603, the display device 100 may convert and display screen data based on a source related to the display device. The source related to the display device may include at least one of the current screen of the display device, a home screen of the display device, or a function or application that is executable on the display device. Thus, according to the source related to the display device, which is identified based on the input data, the display device 100 may display a most recent screen of the display device, display the home screen of the display device, or execute an application of the display device to display an execution screen thereof.

In operation 1604, because the screen control authority has been switched from the source device to the display device, the display device 100 may convert a cursor corresponding to the source device, which has been displayed on the display screen, into a cursor corresponding to the display device, and display the cursor corresponding to the display device.

In operation 1605, while the screen control authority has been transferred to the display device, the input device 200 may receive a user input.

In operation 1606, the input device 200 may transmit, to the display device 100, input data corresponding to the user input.

In operation 1607, the display device 100 may control the screen data displayed on the display, based on the input data received from the input device 200.

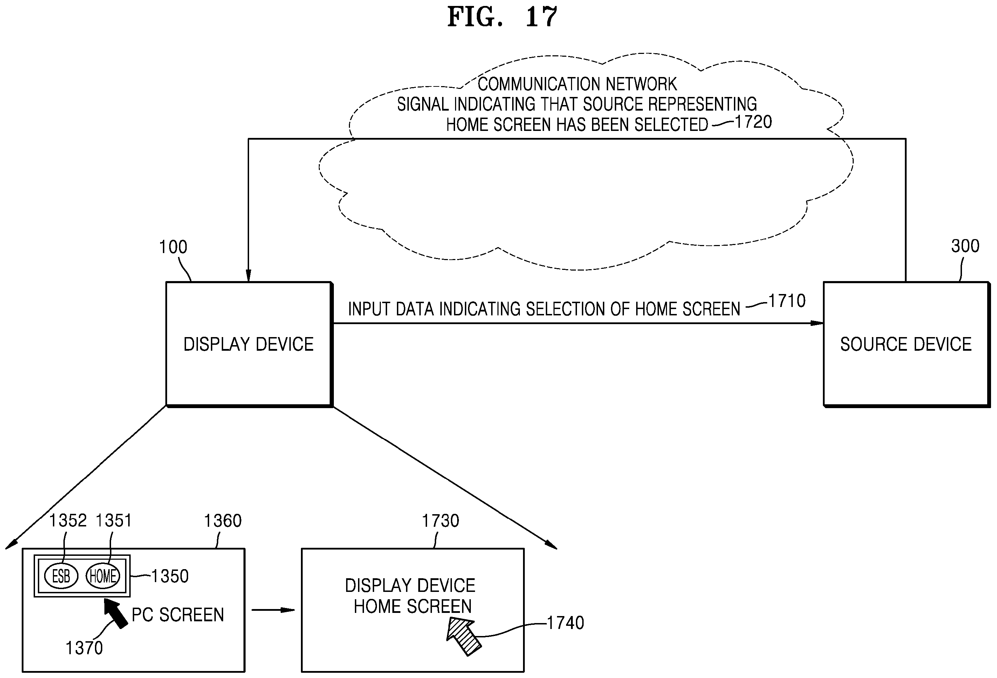

FIG. 17 illustrates an example of the operation method described with reference to FIGS. 15 and 16.

Referring to FIG. 17, while being connected to the source device 300, the display device 100 may display screen data 1360 including a GUI 1350 that enables switching of screen control authority in response to a user request, as described with reference to FIG. 13.

With respect to the screen data 1360, the user may perform manipulation for selecting an item 1351 representing a home screen by using the input device 200, and accordingly, the input device 200 may transmit to the display device 100 input data indicating selection of the item 1351 representing the home screen. Accordingly, the display device 100 may transmit input data 1710 indicating selection of the home screen to the source device 300 currently having the screen control authority. Then, the source device 300 may check the input data 1710 received from the display device 100, determine whether a source selected based on the input data relates to the source device 300 itself, and when the source relates to the source device 300 itself, output a screen corresponding to that source on its own. When the source selected based on the input data does not relate to the source device 300 itself, the source device 300 may transmit, to the display device 100, information about the source selected based on the input data by using short-range communication technology. In the example illustrated in FIG. 17, the source device 300 may identify that the source relates to the display device 100 because the input data 1710 received by the source device 300 indicates selection of the home screen. Accordingly, the source device 300 may transmit, to the display device 100, a signal 1720 indicating that the source representing the home screen has been selected, by using short-range communication technology.

The display device 100 may receive, from the source device 300, the signal 1720 indicating that the source representing the home screen has been selected, and may switch the source displayed on the display of the display device 100 to the home screen of the display device. In other words, the display device 100 may no longer display screen data from the source device 300, but instead display a home screen 1730 of the display device on the display. In addition, because the source related to the display device 100 is provided by the display device itself, the display device 100 may convert a pointer displayed on the display into a display device pointer 1740 for controlling the home screen and display the display device pointer 1740.

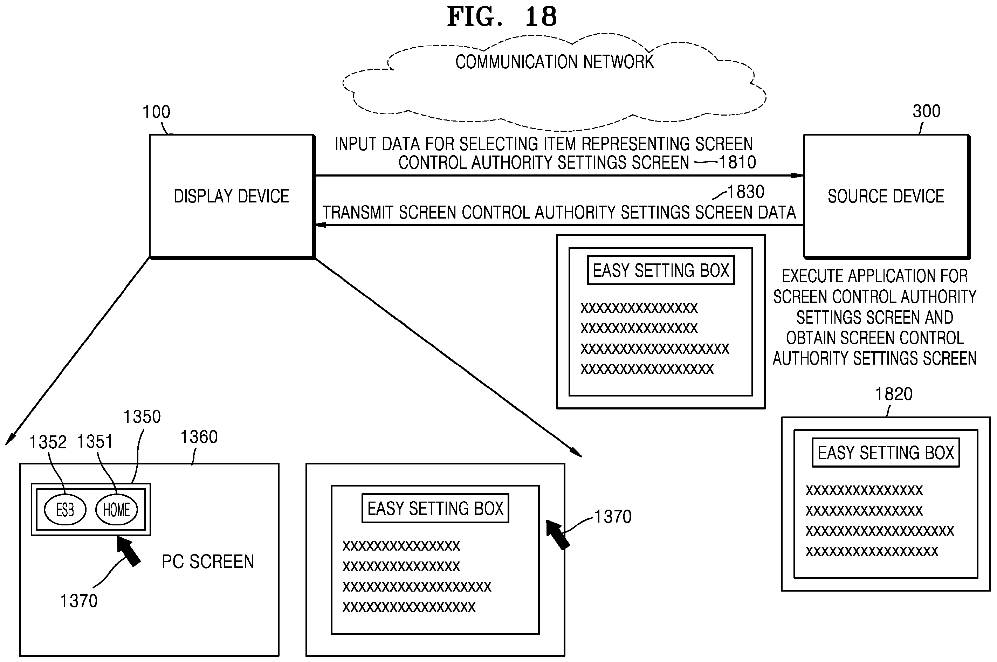

FIG. 18 illustrates an example of an operation method described with reference to FIGS. 14 and 15.

Referring to FIG. 18, while being connected to the source device 300, the display device 100 may display screen data 1360 including a GUI 1350 that enables switching of screen control authority in response to a user request, as described with reference to FIG. 13.

With respect to the screen data 1360, the user may perform manipulation for selecting an item 1352 representing a screen control authority settings screen by using the input device 200, and accordingly, the input device 200 may transmit to the display device 100 input data indicating selection of the item 1352 representing the screen control authority settings screen. Accordingly, the display device 100 may transmit input data 1810 indicating selection of the screen control authority settings screen to the source device 300 currently having the screen control authority. Then, the source device 300 may check the input data 1810 received from the display device 100, determine whether a source selected based on the input data relates to the source device 300 itself, and when the source relates to the source device 300 itself, output a screen corresponding to that source on its own. When the source selected based on the input data does not relate to the source device 300 itself, the source device 300 may transmit, to the display device 100, information about the source selected based on the input data by using short-range communication technology. In the example illustrated in FIG. 18, the source device 300 may identify that the source relates to the source device 300 because the input data 1810 received by the source device 300 indicates selection of the screen control authority settings screen. Accordingly, the source device 300 may execute an application related to screen control authority setting and obtain a screen control authority settings screen 1820.

The source device 300 may transmit, to the display device 100, screen data 1830 including the obtained screen control authority settings screen 1820 to the display device 100.

The display device 100 may display the screen data 1830 including the screen control authority settings screen received from the source device 300.

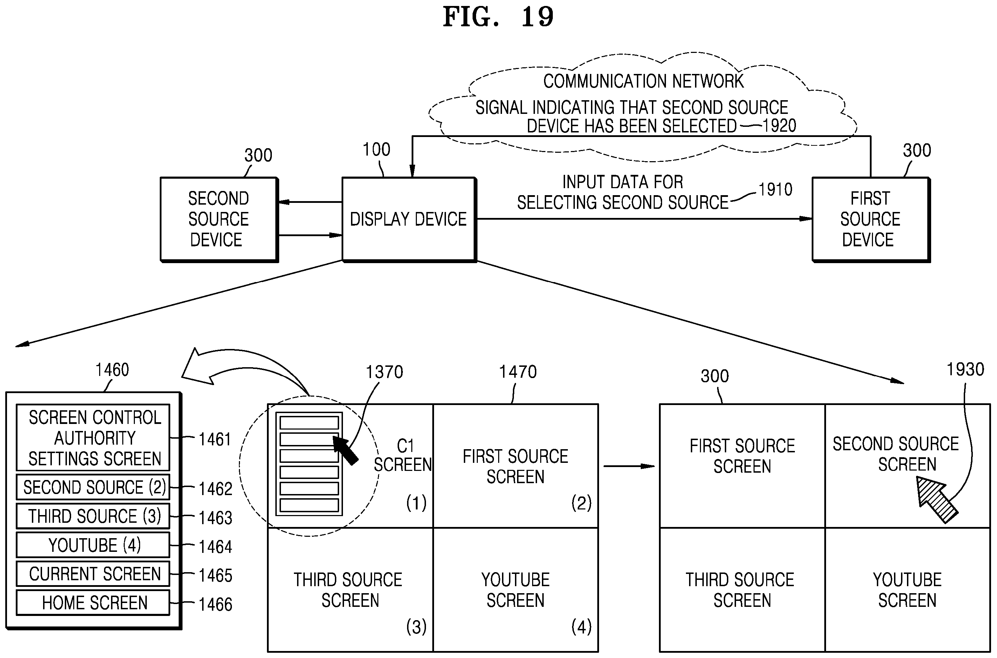

FIG. 19 illustrates an example of an operation method described with reference to FIGS. 15 and 16.

Referring to FIG. 19, while being connected to the first source device 300a, the display device 100 may display screen data 1470 including a GUI 1460 that enables switching of screen control authority in response to a user request, as described with reference to FIG. 14.

With respect to the screen data 1470, the user may perform manipulation for selecting an item 1462 representing a second source by using the input device 200, and accordingly, the input device 200 may transmit to the display device 100 input data indicating selection of the item 1462 representing the second source. Accordingly, the display device 100 may transmit input data 1910 indicating selection of the second source to the first source device 300a currently having the screen control authority. Then, the first source device 300a may check the input data 1910 received from the display device 100, determine whether a source selected based on the input data relates to the first source device 300a itself, and when the source relates to the first source device 300a itself, output a screen corresponding to that source on its own. When the source selected based on the input data does not relate to the first source device 300a itself, the first source device 300a may transmit, to the display device 100, information about the source selected based on the input data by using short-range communication technology. In the example illustrated in FIG. 19, it may be identified that the input data 1910 received by the first source device 300a does not relate to the first source device 300a itself. Therefore, the first source device 300a may transmit, to the display device 100, a signal 1920 indicating selection of the second source.

The display device 100 may receive the signal 1920 indicating the selection of the second source and display a pointer corresponding to a second source device 300b on a second source screen so that the second source device may have screen control authority. Thereafter, the display device 100 may transmit, to the second source device 300b, input data received from the input device 200.

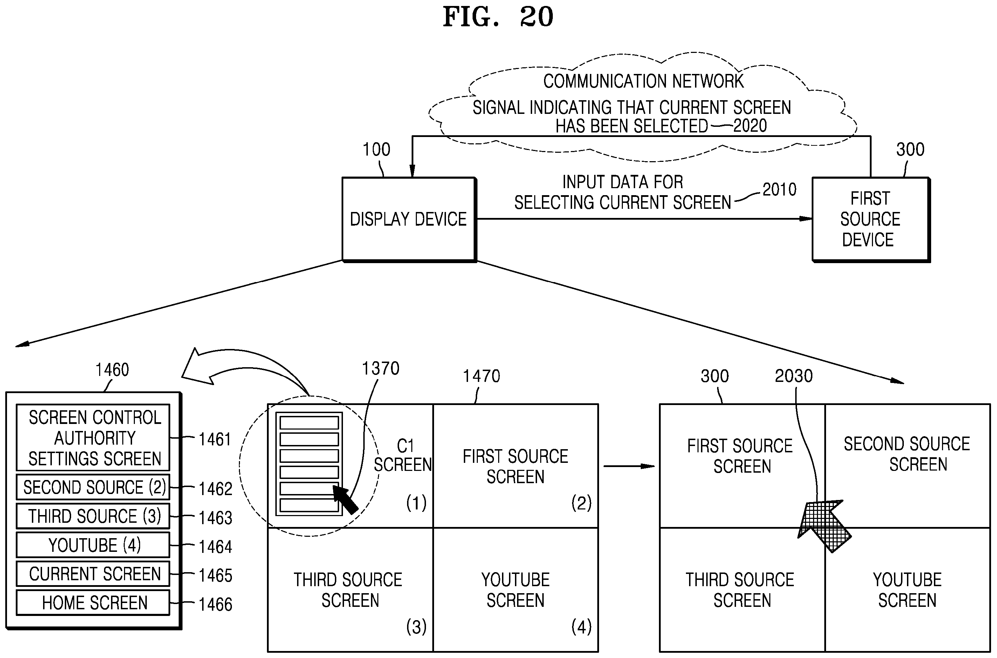

FIG. 20 illustrates an example of an operation method described with reference to FIGS. 15 and 16.

Referring to FIG. 20, while being connected to the first source device 300a, the display device 100 may display screen data 1470 including a GUI 1460 that enables switching of screen control authority in response to a user request, as described with reference to FIG. 14.

With respect to the screen data 1470, the user may perform manipulation for selecting an item 1465 representing a current screen by using the input device 200, and accordingly, the input device 200 may transmit to the display device 100 input data 2010 indicating selection of the item 1465 representing the current screen. Accordingly, the display device 100 may transmit input data 2010 indicating selection of the current screen to the first source device 300a currently having the screen control authority. Then, the first source device 300a may check the input data 2010 received from the display device 100, determine whether a source selected based on the input data relates to the first source device 300a itself, and when the source relates to the first source device 300a itself, output a screen corresponding to that source on its own. When the source selected based on the input data does not relate to the first source device 300a itself, the first source device 300a may transmit, to the display device 100, information about the source selected based on the input data by using short-range communication technology. In the example illustrated in FIG. 20, it may be identified that the input data 2010 received by the source device 300a does not relate to the first source device 300a itself. Therefore, the first source device 300a may transmit, to the display device 100, a signal 2020 indicating selection of the current screen.

The display device 100 may receive the signal 2020 indicating selection of the current screen, and determine that the screen control authority resides in the current screen of the display device. The current screen of the display device 100 represents a screen on which a multi-view is currently being displayed. Accordingly, the display device 100 may maintain the current multi-view display and display a pointer 2030 used by the display device 100. In the current screen state of the display device 100, i.e., in the multi-view state, the user may select each sub-view screen constituting the multi-view screen by manipulating the pointer 2030, or may control the display of a predetermined menu window by pressing a specific button on the input device 300.

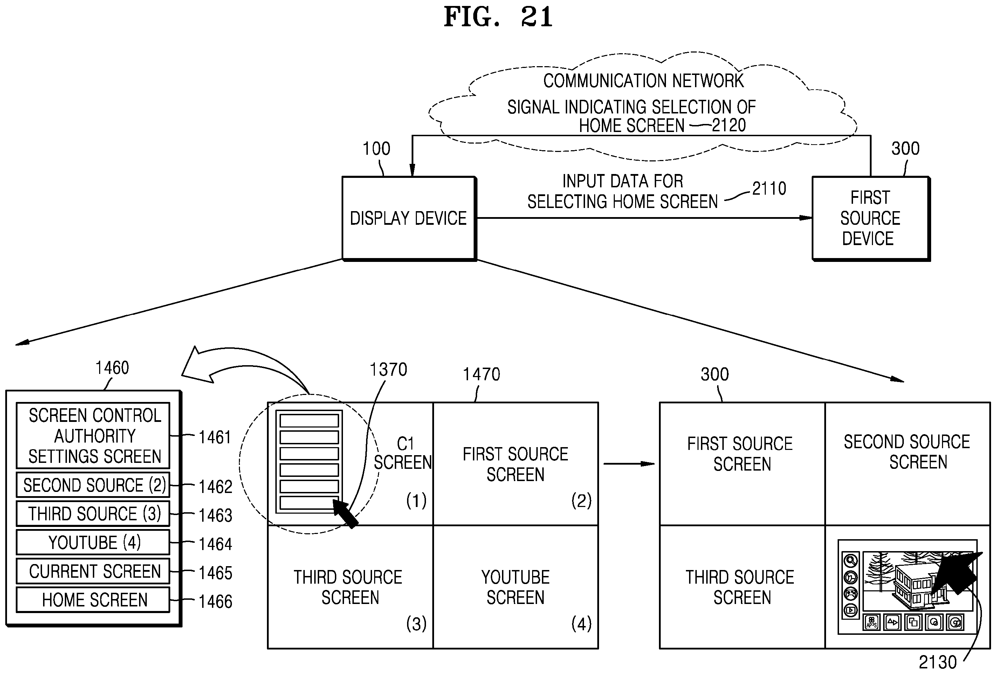

FIG. 21 illustrates an example of an operation method described with reference to FIGS. 15 and 16.

Referring to FIG. 21, while being connected to the first source device 300a, the display device 100 may display screen data 1470 including a GUI 1460 that enables switching of screen control authority in response to a user request, as described with reference to FIG. 14.

With respect to the screen data 1470, the user may perform manipulation for selecting an item 1466 representing a home screen by using the input device 200, and accordingly, the input device 200 may transmit to the display device 100 input data 2110 indicating selection of the item 1466 representing the home screen. Accordingly, the display device 100 may transmit input data 2110 indicating selection of the home screen to the first source device 300a currently having the screen control authority. Then, the first source device 300a may check the input data 2110 received from the display device 100, determine whether a source selected based on the input data relates to the first source device 300 itself, and when the source relates to the first source device 300a itself, output a screen corresponding to that source on its own. When the source selected based on the input data does not relate to the first source device 300a itself, the first source device 300a may transmit, to the display device 100, information about the source selected based on the input data by using short-range communication technology. In the example illustrated in FIG. 21, it may be identified that the input data 2110 received by the first source device 300a does not relate to the first source device 300a. Therefore, the first source device 300a may transmit, to the display device 100, a signal 2120 indicating selection of the home screen.

The display device 100 may receive the signal 2120 indicating selection of the home screen, and determine that the screen control authority resides in the home screen of the display device. Therefore, the display device 100 may display the home screen in a fourth sub-view that displays an execution screen of a YouTube application currently running on the display device 100. In addition, the display device 100 may display a cursor 2130 corresponding to the display device 100 on the home screen displayed in the fourth sub-view.

Some embodiments may be implemented in the form of recording media including instructions executable by a computer, such as a program module executed by the computer. The computer-readable recording media may be any available media that are accessible by the computer, and include both volatile and non-volatile media and both removable and non-removable media. Furthermore, the computer-readable recording media may include computer storage media. The computer storage media include both volatile and non-volatile and both removable and non-removable media implemented in any method or technology for storage of information, such as computer-readable instructions, data structures, program modules, or other data.

The disclosed embodiments may be implemented as a software program including instructions stored in computer-readable storage media.

A computer is a device capable of calling a stored instruction from a storage medium and performing an operation according to the disclosed embodiment in response to the called instruction, and may include an electronic device according to the disclosed embodiments.

A computer-readable storage medium may be provided in the form of a non-transitory storage medium. In this regard, the term 'non-transitory' only means that the storage medium does not include a signal and is a tangible device, and the term does not differentiate between where data is semi-permanently stored in the storage medium and where the data is temporarily stored in the storage medium.

Furthermore, operation methods according to the disclosed embodiments may be included in the form of a computer program product when provided. The computer program product may be traded, as a product, between a seller and a buyer.

The computer program product may include a software program and a computer-readable storage medium having the software program stored thereon. For example, the computer program product may include a product (e.g., a downloadable application) in the form of a software program electronically distributed by a manufacturer of a device or through an electronic market (e.g., Google Play Store^{™} and App Store ^{™}). For such electronic distribution, at least a part of the software program may be stored on the storage medium or may be temporarily generated. In this case, the storage medium may be a storage medium of a server of the manufacturer, a server of the electronic market, or a relay server for temporarily storing the software program.

In a system consisting of a server and a device, the computer program product may include a storage medium of the server or a storage medium of the device. Alternatively, in a case where there is a third device (e.g., a smartphone) communicatively connected to the server or the device, the computer program product may include a storage medium of the third device. Alternatively, the computer program product may include a software program itself that is transmitted from the server to the device or the third device or that is transmitted from the third device to the device.

In this case, one of the server, the device, and the third device may execute the computer program product to perform methods according to the disclosed embodiments. Alternatively, two or more of the server, the device, and the third device may execute the computer program product to perform the methods according to the disclosed embodiments in a distributed manner.

For example, the server (e.g., a cloud server or artificial intelligence (AI) server) may execute the computer program product stored therein to control the device communicatively connected to the server to perform the methods according to the disclosed embodiments.

In another example, the third device may execute the computer program product to control the device communicatively connected to the third device to perform the methods according to the disclosed embodiments. In a case where the third device executes the computer program product, the third device may download the computer program product from the server and execute the downloaded computer program product. Alternatively, the third device may execute the computer program product that is preloaded therein to perform the methods according to the disclosed embodiments.

Also, in this specification, the term "unit" may be a hardware component such as a processor or circuit, and/or a software component executed by a hardware component such as a processor.

The above description of the present disclosure is provided for illustration, and it will be understood by one of ordinary skill in the art that changes in forms or details may be readily made therein without departing from technical idea or essential features of the present disclosure. Accordingly, the above-described embodiments and all aspects thereof are merely examples and are not limiting. For example, each component defined as an integrated component may be implemented in a distributed fashion, and likewise, components defined as separate components may be implemented in an integrated form.

The scope of the present disclosure is defined not by the detailed description thereof but by the following claims, and all the changes or modifications within the meaning and scope of the appended claims and their equivalents should be construed as being included in the scope of the present disclosure.

## Claims

1. A display device (100) comprising:
a display;
a communication interface (110);
memory (130) storing one or more instructions; and
at least one processor (140) configured to execute the one or more instructions stored in the memory,
wherein the at least one processor (150) is configured to execute the one or more instructions to
control the display to receive and display screen data from a source device that provides the screen data and is from among one or more source devices connected via wired or wireless communication,
transmit input data received from an input device connected via wired or wireless communication to a source device that has screen control authority, which represents an authority to control the screen data, and is from among the one or more source devices,
based on receiving, from the source device having the screen control authority, a request associated with the screen control authority, in response to a pointer, which is displayed by the source device having the screen control authority for controlling a display position by using the input data, being positioned in a predetermined region of a display screen corresponding to the screen data, control the communication interface to transmit, to the source device having the screen control authority, information for switching the screen control authority,
control the communication interface to receive, from the source device having the screen control authority, a graphical user interface screen enabling switching of the screen control authority, which is generated based on the information for switching the screen control authority, and
control the display to display the received graphical user interface screen.

2. The display device of claim 1, wherein
the information for switching the screen control authority comprises information about one or more sources to which the screen control authority is switchable, and
the information about the one or more sources to which the screen control authority is switchable comprises at least one of
information indicating a screen to be provided by one or more source devices to which the screen control authority is switchable,
information indicating an application executable on one or more source devices to which the screen control authority is switchable,
information indicating an application executable on the source device having the screen control authority,
information indicating a screen to be provided by the display device, and
information indicating an application executable on the display device.

3. The display device of claim 1 or 2, wherein the screen to be provided by the one or more source devices to which the screen control authority is switchable comprises a home screen or a most recent screen providable by the one or more source devices to which the screen control authority is switchable.

4. The display device of any one of claims 1 to 3, wherein the information for switching the screen control authority further comprises information indicating whether a screen provided on the display is a single-view screen or a multi-view screen.

5. The display device of any one of claims 1 to 4, wherein
the graphical user interface screen enabling switching of the screen control authority comprises one or more items respectively corresponding to the one or more sources to which the screen control authority is switchable, and
the at least one processor (150) is further configured to execute the one or more instructions to
receive, from the input device, an input for selecting an item from among the one or more items, and
transmit, to the source device, input data based on the input for selecting the item.

6. The display device of any one of claims 1 to 5, wherein the at least one processor (150) is further configured to execute the one or more instructions to,
in response to identifying, based on the input data, that a source to which the screen control authority is to be switched relates to the source device, receive from the source device an execution screen on which an application of the source device corresponding to the selected item is executed, and display the execution screen.

7. The display device of any one of claims 1 to 6, wherein the application of the source device comprises an application for setting screen control authority.

8. The display device of any one of claims 1 to 7, wherein
the at least one processor (150) is further configured to execute the one or more instructions to,
based on the input data, receive, from the source device, information about a source to which the screen control authority is to be switched, identify whether the source to which the screen control authority is to be switched relates to the display device,
based on identifying that the source to which the screen control authority is to be switched relates to the display device, determine whether the screen provided on the display is a multi-view screen, and
based on the screen being the multi-view screen, maintain a current multi-view screen of the display device and convert a pointer of the source device into a pointer of the display device for display.

9. The display device of any one of claims 1 to 8, wherein
the at least one processor (150) is further configured to execute the one or more instructions to,
based on the input data, receive, from the source device, information about a source to which the screen control authority is to be switched,
identify whether the source to which the screen control authority is to be switched relates to the display device,
based on identifying that the source to which the screen control authority is to be switched relates to the display device, determine whether the screen provided on the display is a multi-view screen, and
based on the screen being a single-view screen, display, in correspondence with the information about the source to which the screen control authority is to be switched, one of a most recent screen to be provided by the display device, a home screen to be provided by the display device, or a screen on which an application of the display device is executed.

10. The display device of any one of claims 1 to 9, wherein, according to a specific program executed on the source device, the display device is discovered based on short-range communication and pre-registered with the source device for transmission and reception of the information for the screen control authority.

11. An operation method of a display device (100), the operation method comprising:
receiving and displaying screen data from a source device that provides the screen data and is from among one or more source devices connected via wired or wireless communication;
transmitting input data received from an input device connected via wired or wireless communication to a source device that has screen control authority, which represents an authority to control the screen data, and is from among the one or more source devices;
based on receiving, from the source device having the screen control authority, a request associated with the screen control authority, in response to a pointer, which is displayed by the source device having the screen control authority for controlling a display position by using the input data, being positioned in a predetermined region of a display screen corresponding to the screen data, transmitting, to the source device having the screen control authority, information for switching the screen control authority;
receiving, from the source device having the screen control authority, a graphical user interface screen enabling switching of the screen control authority, which is generated based on the information for switching the screen control authority; and
displaying the received graphical user interface screen.

12. The operation method of claim 11, wherein
the information for switching the screen control authority comprises information about one or more sources to which the screen control authority is switchable, and
the information about the one or more sources to which the screen control authority is switchable comprises at least one of
information indicating a screen to be provided by one or more source devices to which the screen control authority is switchable,
information indicating an application executable on one or more source devices to which the screen control authority is switchable,
information indicating an application executable on the source device having the screen control authority,
information indicating a screen to be provided by the display device, and
information indicating an application executable on the display device.

13. The operation method of claim 11 or 12, wherein the screen to be provided by the one or more source devices to which the screen control authority is switchable comprises a home screen or a most recent screen providable by the one or more source devices to which the screen control authority is switchable.

14. The operation method of any one of claims 11 to 13, wherein the information for switching the screen control authority further comprises
information indicating whether a screen provided on the display is a single-view screen or a multi-view screen.

15. A non-transitory computer-readable recording medium having recorded thereon one or more instructions to be executed by a processor of a display device, wherein the one or more instructions, when executed by the processor of the display device, cause the display device to
receive and display screen data from a source device that provides the screen data and is from among one or more source devices connected via wired or wireless communication,
transmit input data received from an input device connected via wired or wireless communication to a source device that has screen control authority, which represents an authority to control the screen data, and is from among the one or more source devices,
based on receiving, from the source device having the screen control authority, a request associated with the screen control authority, in response to a pointer, which is displayed by the source device having the screen control authority for controlling a display position by using the input data, being positioned in a predetermined region of a display screen corresponding to the screen data, transmit, to the source device having the screen control authority, information for switching the screen control authority,
receive, from the source device having the screen control authority, a graphical user interface screen enabling switching of the screen control authority, which is generated based on the information for switching the screen control authority, and
display the received graphical user interface screen.
